(19) Europäisches Patentamt / European Patent Office / Office européen des brevets

(11) **EP 3 992 676 B1**

(12) **EUROPEAN PATENT SPECIFICATION**

(45) Date of publication and mention of the grant of the patent:
**25.09.2024 Bulletin 2024/39**

(21) Application number: **20831087.0**

(22) Date of filing: **24.06.2020**

(51) International Patent Classification (IPC):
***B32B 27/30*** *(2006.01)* ***G02B 7/09*** *(2021.01)*
***G02B 5/30*** *(2006.01)* ***B32B 7/023*** *(2019.01)*
***B32B 7/12*** *(2006.01)* ***B32B 27/00*** *(2006.01)*
*G02F 1/1335 (2006.01)* *C09K 19/04 (2006.01)*
*C09K 19/20 (2006.01)*

(52) Cooperative Patent Classification (CPC):
**G02B 7/09; B32B 7/12; B32B 27/308;**
B32B 2255/10; B32B 2255/26; B32B 2307/416; B32B 2307/54; B32B 2451/00; B32B 2457/20; C09K 2019/0448; C09K 2019/2078; G02F 1/1335

(86) International application number:
**PCT/JP2020/024860**

(87) International publication number:
**WO 2020/262474 (30.12.2020 Gazette 2020/53)**

# (54) DECORATIVE FILM FOR MOLDING, MOLDED ARTICLE, AND DISPLAY

DEKORFOLIE ZUM FORMEN, FORMGEGENSTAND UND ANZEIGE

FILM DÉCORATIF POUR MOULAGE, ARTICLE MOULÉ ET DISPOSITIF D’AFFICHAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.06.2019 JP 2019119897**
**23.07.2019 JP 2019135687**

(43) Date of publication of application:
**04.05.2022 Bulletin 2022/18**

(73) Proprietor: **FUJIFILM Corporation**
**Tokyo 106-8620 (JP)**

(72) Inventors:
- **HAYATA, Yuichi**
  **Kanagawa 250-0193 (JP)**
- **YANAI, Yujiro**
  **Kanagawa 250-0193 (JP)**

(74) Representative: **Kudlek, Franz Thomas**
**Dehns Germany**
**Theresienstraße 6-8**
**80333 München (DE)**

(56) References cited:
**WO-A1-2013/141257** **WO-A1-2016/159042**
**WO-A1-2017/221760** **JP-A- 2003 177 243**
**JP-A- 2011 186 270** **JP-A- 2014 071 155**
**JP-A- 2015 163 596** **JP-A- 2017 205 988**
**JP-A- 2017 205 988** **US-A1- 2003 160 938**
**US-A1- 2018 215 843**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

BACKGROUND OF THE INVENTION

1. Field of the Invention

The present disclosure relates to a decorative film for molding, a molded product, and a display.

2. Description of the Related Art

In recent years, there are various requests for decorative films which can display specific images and the like. For example, there is a demand for a transmissive decorative film (transparent decorative film) in which a scene from one side of the decorative film to the other side can be visually recognized through the decorative film itself, and a specific display can be visually recognized from one side (surface) and the display cannot be substantially visually recognized from the other side (back surface). For example, it is disclosed a transparent decorative film in which, by having a circularly polarizing plate, a cholesteric liquid crystal layer disposed on a part of the circularly polarizing plate, and a packing layer covering a side surface of the cholesteric liquid crystal layer and a surface of the circularly polarizing plate on which the cholesteric liquid crystal layer is not formed, different visual effects on an observation surface can be obtained (for example, see JP2018-97327A).

In addition, in recent years, a transparent display device having a light emitting layer sandwiched between a pair of transparent electrodes, in which image and text information can be displayed on both sides and the background can be seen through, has attracted attention. In particular, a transparent display device using an organic electro-luinescence (EL) panel has attracted attention (for example, see JP2007-071948A). However, from the viewpoint of privacy and the like, in some cases, it is desired that the transparent display disclosed in JP2007-071948A is transparently visible from one side and not visible from the other side.

In addition, in a case where the display is not displayed, from the viewpoint of interior design and the like, there is an increasing need for versatile use, for example, the decorative pattern can be seen, the display is used as a mirror as disclosed in JP2011-045427A, or the like.

Document US 2003/160938 A1 disclosed an optical element comprising a supporting member, and an optical functional layer of a polymerizable liquid crystal material hardened on the supporting member with a predetermined liquid crystal regularity, wherein the optical functional layer has elastic modulus of 1.2 MPa or higher at temperature in a range of 20° C. to 200° C., is provided.

Document US 2018/215843 A1 discloses an optical film including a cholesteric layer of a disk-like liquid crystal composition including a disk-like liquid crystal compound, in which the cholesteric layer exhibits a cholesteric liquid crystalline phase, and in which fluctuation of a helical pitch in a film thickness direction of the cholesteric layer is 2% or greater, and having a cholesteric liquid crystalline phase of a disk-like liquid crystal compound and a wide reflection bandwidth; a brightness enhancement film; a backlight unit with a brightness enhancement film; and a liquid crystal display device.

Document JP 2017 205988 A discloses a decorative sheet having a first patterned cholesteric liquid crystal reflection layer and a second patterned cholesteric liquid crystal reflection layer deposited thereon. The pattern shape of the first patterned cholesteric liquid crystal reflection layer coincides with the pattern shape of the second patterned cholesteric liquid crystal reflection layer; and the first patterned cholesteric liquid crystal reflection layer reflects first circularly polarized light, while the second patterned cholesteric liquid crystal reflection layer reflects second circularly polarized light having a different peak wavelength of characteristic reflection from that of the first circularly polarized light. The patterned cholesteric liquid crystal reflection layer shows a reflectance of light of 5% or more at a wavelength in the wavelength region from 400 to 700 nm and an average reflectance of light of 10% or more in the above wavelength region.

Document JP 2015 163596 A discloses a polymerizable compound, a polymerizable composition comprising the polymerizable compound, a film formed from the polymerizable composition, and a half mirror for displaying a projected image, which comprises the above film.

SUMMARY OF THE INVENTION

The films disclosed in JP2018-97327A, JP2007-071948A, and JP2011-045427Ahave a planar shape, and there is no disclosure about moldability. In addition, from studies conducted by the present inventors, it has been confirmed that tint of the film disclosed in JP2007-071948A changes depending on a viewing angle to be visually recognized. From the viewpoint of further enhancing decorativeness, incorporating into a housing such as a display, and applicability to a three-dimensional (3D) shape display surface, it is preferable to have molding processability into a 3D shape. In addition, in a case of visually recognizing the decorative film, a film having little change in tint depending on the viewing angle is preferable.

An object to be achieved by embodiments of the present disclosure is to provide a decorative film for molding, which has excellent molding suitability and uniform tint regardless of viewing angle, a molded product of the decorative film for molding, and a display to which the molded product is applied.
The present invention relates to a decorative film for molding, a molded product, and a display with the features of the independent claims.
The decorative film for molding according to the present invention comprises:

a plastic base material; and
a reflective layer which is provided on the plastic base material and has a center wavelength of a selective reflection wavelength in a range of from 380 nm to 780 nm,
an elastic modulus of the reflective layer at a temperature of a glass transition temperature of the plastic base material + 10°C being from 0.00001 GPa to 0.5 GPa.

According to the invention, the reflective layer is a layer comprising a cholesteric liquid crystal.
According to an example, not according to the claimed invention, the cholesteric liquid crystal compound has one ethylenic unsaturated group or one cyclic ether group.
According to the invention, the cholesteric liquid crystal compound has one ethylenic unsaturated group and one cyclic ether group.
According to an embodiment, the reflective layer further comprises a chiral agent comprising a polymerizable group, or further comprises a chiral agent comprising a polymerizable group and a chiral agent not comprising a polymerizable group.
According to an embodiment, the chiral agent comprising a polymerizable group has two or more polymerizable groups.
According to an embodiment, the layer comprising a cholesteric liquid crystal compound is a cured substance of a liquid crystal composition comprising the cholesteric liquid crystal compound and a photopolymerization initiator.
The molded product according to the present invention is obtained by molding the decorative film for molding according to an embodiment of the present invention.
The display according to the present invention comprises:
the molded product according to the present invention disposed on a display unit.
According to an embodiment, the display comprises:

a display unit; and
a molded product according to the present invention, the molded product being disposed adjacent to the display unit, the molded product having a relationship of $T2 > 0.02 \times T1$, in which T2 being a maximum height of a display surface of the display unit in a normal direction, and T1 being a maximum width of the display surface in an in-plane direction.

According to the present invention, it possible is to provide a decorative film for molding, which has excellent molding suitability and uniform tint regardless of viewing angle, a molded product of the decorative film for molding, and a display to which the molded product is applied.

BRIEF DESCRIPTION OF THE DRAWINGS

Fig. 1 is a schematic plan view of an example of a convex mold of a molding die which is composed of a concave mold and a convex mold in a case of being viewed from above.
Fig. 2 is a schematic cross-sectional view schematically showing a cross section cut in a direction parallel to a longitudinal direction in the top view of Fig. 1.
Fig. 3 is a schematic cross-sectional view schematically showing a cross section cut in a direction parallel to a lateral direction in the top view of Fig. 1.
Fig. 4 is a schematic plan view of another example of a convex mold of a molding die which is composed of a concave mold and a convex mold in a case of being viewed from above.
Fig. 5 is a schematic cross-sectional view schematically showing a cross section 62 obtained by cutting the convex mold of Fig. 4 along a line passing through a circular center in the top view.

DESCRIPTION OF THE PREFERRED EMBODIMENTS

Hereinafter, the contents of the present disclosure will be described in detail. The description of configuration

requirements below is made based on representative embodiments of the present disclosure in some cases, but the present disclosure is not limited to such embodiments.

In the present specification, a "center wavelength of a selective reflection wavelength" refers to an average value of two wavelengths indicating a half-value transmittance [$T^{1/2}$; %] expressed by the following expression, in a case where the minimum value and minimal value of the light transmittance of a target object (a member) is defined as Tmin (%). However, one wavelength of the two wavelengths is the maximum wavelength in a wavelength range including a wavelength shorter than the wavelength indicating Tmin, and the other wavelength of the two wavelengths in the minimum wavelength in the wavelength range including a wavelength longer than the wavelength indicating Tmin.

$$T^{1/2} = 100 - (100 - \mathrm{Tmin}) \div 2$$

In the present specification, the numerical ranges shown using "to" indicate ranges including the numerical values described before and after "to" as a lower limit value and an upper limit value.

In numerical ranges described in stages in the present specification, an upper limit value or a lower limit value described in one numerical range may be replaced with an upper limit value or a lower limit value of a numerical range described in another stage. In addition, in the numerical ranges described in the present specification, the upper limit value or the lower limit value of the numerical ranges may be replaced with the values shown in examples.

Furthermore, in the present specification, in a case where a plurality of substances corresponding to each component in a composition is present, the amount of each component in the composition means the total amount of the plurality of substances present in the composition, unless otherwise specified.

In the present specification, the term "step" includes not only the independent step but also a step in which intended purposes are achieved even in a case where the step cannot be precisely distinguished from other steps.

In the present specification, the "total solid content" refers to a total mass of components obtained by removing a solvent from the whole composition of the composition. In addition, the "solid content" is a component obtained by removing a solvent as described above, and for example, the component may be solid or may be liquid at 25°C.

In a case where substitution or unsubstitution is not noted in regard to the notation of a "group" (atomic group) in the present specification, the "group" includes not only a group not having a substituent but also a group having a substituent. For example, the concept of an "alkyl group" includes not only an alkyl group not having a substituent (unsubstituted alkyl group) but also an alkyl group having a substituent (substituted alkyl group).

In addition, in the present disclosure, "% by mass" has the same definition as that for "% by weight", and "part by mass" has the same definition as that for "part by weight".

Furthermore, in the present disclosure, a combination of two or more preferred aspects is a more preferred aspect.

In addition, the weight-average molecular weight (Mw) and the number-average molecular weight (Mn) in the present disclosure are molecular weights in terms of polystyrene used as a standard substance, which are detected by using a solvent tetrahydrofuran (THF), a differential refractometer, and a gel permeation chromatography (GPC) analyzer using TSKgel GMHxL, TSKgel G4000HxL, and TSKgel G2000HxL (all trade names manufactured by Tosoh Corporation) as columns, unless otherwise specified.

Hereinafter, the present disclosure will be described in detail.

(Decorative film for molding)

A decorative film for molding (hereinafter, also simply referred to as a "decorative film") according to the embodiment of the present disclosure is a decorative film including a plastic base material (hereinafter, also simply referred to as a base material) and a reflective layer which is provided on the plastic base material and has a center wavelength of a selective reflection wavelength in a range of 380 nm to 780 nm, in which an elastic modulus of the reflective layer at a temperature of a glass transition temperature (hereinafter, may be abbreviated as "Tg") of the plastic base material + 10°C is 0.0001 GPa to 0.5 GPa.

In addition, the decorative film for molding according to the embodiment of the present disclosure can be used for various purposes, and examples thereof include interior and exterior of displays, interior and exterior of electric appliances, interior and exterior of automobiles, and packaging containers. Among these, the decorative film for molding according to the embodiment of the present disclosure can be suitably used as the interior and exterior of displays, and can be particularly suitably used as a decorative film for molding used for the exterior of displays.

In the decorative film in the related art, such as the decorative films disclosed in JP2018-97327A and JP2007-071948A, the present inventors have found that stretching during molding causes crack formation or breakage in the reflective layer, resulting in a problem of impairing designability. As a result of intensive studies conducted by the present inventors, it has been found that a decorative film for molding having molding processability which does not

cause remarkable crack formation and breakage by molding can be provided by employing the above-described configuration.

The mechanism of the excellent effects obtained by employing the above-described configuration is not clear, but is presumed as follows.

In general, molding process of a plastic sheet is usually performed at a temperature of "Tg + 10°C" or higher of the plastic base material. In a case where the elastic modulus of the reflective layer at a temperature of Tg + 10°C is in the range of 0.0001 GPa or more, a self-cohesive force of the reflective layer and a structure of the film are maintained, and the film is stretched following the plastic base material. In addition, it is presumed that, in a case where the elastic modulus is 0.5 GPa or less, flexibility of the reflective layer is maintained, and occurrence of breakage and cracks is suppressed, and the reflective layer can be stretched following the base material.

In addition, by having the center wavelength of the selective reflection wavelength in the range of 380 nm to 780 nm, which is a wavelength visible to the human eye, a decorative film in which a change in color depending on the viewing angle and the viewed color itself can be adjusted and the designability is also excellent can be provided.

Hereinafter, the decorative film for molding according to the embodiment of the present disclosure will be described in detail.

<Base material>

The decorative film for molding according to the embodiment of the present disclosure has a base material.

As the base material, a known base material in the related art, as a base material used for molding such as three-dimensional molding and insert molding, can be used without particular limitation and may be appropriately selected depending on the application of the decorative film, suitability for insert molding, and the like.

In addition, a shape and material of the base material are particularly limited, and may be appropriately selected as desired. From the viewpoint of ease of molding (particularly, ease of insert molding) and chipping resistance, the base material is preferably a resin base material, and preferably a resin film.

Specific examples of the base material include a resin film including a resin such as polyethylene terephthalate (PET), polyethylene naphthalate (PEN), an acrylic resin, a urethane resin, a urethane-acrylic resin, polycarbonate (PC), an acrylic-polycarbonate resin, triacetyl cellulose (TAC), polyolefin, a cycloolefin polymer (COP), and an acrylonitrile/butadiene/styrene copolymer resin (ABS resin).

Among these, from the viewpoint of molding processability and strength, at least one resin film selected from the group consisting of PET, an acrylic resin, a urethane resin, a urethane-acrylic resin, PC, an acrylic-polycarbonate resin, and polypropylene is preferable, and at least one resin film selected from the group consisting of an acrylic resin, PC, and an acrylic-polycarbonate resin is more preferable.

In addition, the base material may be a laminated resin base material having two or more layers. Preferred examples thereof include an acrylic resin/polycarbonate laminated film.

The base material may contain other additives as necessary.

Examples of the additive include lubricants such as mineral oil, hydrocarbons, fatty acids, alcohols, fatty acid esters, fatty acid amides, metallic soaps, natural waxes, and silicone; inorganic flame retardants such as magnesium hydroxide and aluminum hydroxide; organic flame retardants such as a halogen-based flame retardant and a phosphorus-based flame retardant; organic or inorganic fillers such as metal powder, talc, calcium carbonate, potassium titanate, glass fibers, carbon fibers, and wood powder; additives such as an antioxidant, a UV inhibitor, a lubricant, a dispersant, a coupling agent, a foaming agent, and a colorant; and engineering plastics other than the above-described resins, such as polyester, polyacetal, polyamide, and polyphenylene ether.

As the base material, a commercially available product may be used.

Examples of the commercially available product include TECHNOLLOY (registered trademark) series (acrylic resin film or acrylic resin/polycarbonate resin laminated film, manufactured by Sumitomo Chemical Co., Ltd.), ABS films (manufactured by Okamoto Industries, Inc.), ABS sheets (manufactured by SEKISUI SEIKEI CO., LTD.), Teflex (registered trademark) series (PET film, manufactured by TEIJIN FILM SOLUTIONS LIMITED), Lumirror (registered trademark) easily moldable type (PET film, manufactured by TORAY INDUSTRIES, INC), and Purethermo (polypropylene film, manufactured by Idemitsu Kosan Co., Ltd.).

ABS refers to an acrylonitrile/butadiene/styrene copolymer resin.

The thickness of the base material is determined according to the intended use of the molded product to be produced, handleability of the film, and the like. The thickness is not particularly limited, but is preferably 1 μm or more, more preferably 10 μm or more, still more preferably 20 μm or more, and particularly preferably 50 μm or more. The upper limit is preferably 500 μm or less, more preferably 450 μm or less, and particularly preferably 200 μm or less.

<Reflective layer>

The decorative film for molding according to the claimed invention has a reflective layer which is provided on the plastic base material and has a center wavelength of a selective reflection wavelength in a range of 380 nm to 780 nm, wherein the reflective layer is a layer comprising a cholesteric liquid crystal compound. Other examples of the reflective layer, not according to the claimed invention, having the selective reflection wavelength include a dielectric multi-layer film, and a metal fine particle-containing film, and from the viewpoint of stretchability, a layer including a cholesteric liquid crystal compound is preferable.

The elastic modulus of the reflective layer at a temperature of a glass transition temperature (Tg) of the plastic base material + 10°C is 0.00001 GPa to 0.5 GPa, preferably 0.00005 GPa to 0.5 GPa, more preferably 0.0001 GPa to 0.3 GPa, particularly preferably 0.0001 GPa to 0.1 GPa, and most preferably 0.0001 GPa to 0.015 GPa.

The elastic modulus of the reflective layer is a value measured by a minute indentation hardness, and can be measured using, for example, Nano Indenter G200 manufactured by TOYO Corporation.

-Cholesteric liquid crystal layer-

The reflective layer is a layer including a cholesteric liquid crystal compound (cholesteric liquid crystal layer).

The cholesteric liquid crystal layer in the decorative film for molding according to the embodiment of the present disclosure is provided on the base material and may not be in direct contact with the base material, and for example, the cholesteric liquid crystal layer may be provided on the base material through another layer such as a colored layer described later.

In the decorative film for molding according to the embodiment of the present disclosure, by changing at least one selected from the group consisting of the pitch of a helical structure, refractive index, and thickness of the cholesteric liquid crystal layer, it is possible to adjust the change in color depending on the viewed angle, and the viewed color itself. The pitch of the helical structure can be easily adjusted by changing the addition amount of a chiral agent. More specifically, detailed description can be found in FUJIFILM Research Report No. 50 (2005), pp. 60 to 63. In addition, the pitch of the helical structure can also be adjusted by conditions such as temperature, illuminance, and irradiation time in a case of fixing cholesteric alignment state.

As the cholesteric liquid crystal layer, a liquid crystal compound fixed in a cholesteric alignment state is preferable. The cholesteric alignment state may be an alignment state reflecting dextrorotatory circularly polarized light, may be an alignment state reflecting levorotatory circularly polarized light, or may include both alignment states. The liquid crystal compound is not particularly limited, and various known compounds can be used.

<<Liquid crystal composition>>

The cholesteric liquid crystal layer is preferably a layer obtained by curing the liquid crystal composition.

The liquid crystal composition according to the claimed invention includes at least a cholesteric liquid crystal compound having one ethylenic unsaturated group and one cyclic ether group. The "having one ethylenic unsaturated group and one cyclic ether group" does not mean that one molecule has any of an ethylenic unsaturated group or a cyclic ether group, but means that one molecule has one of an ethylenic unsaturated group and a cyclic ether group.

The cholesteric liquid crystal layer is more preferably a cured substance (cured layer) of a liquid crystal composition including a cholesteric liquid crystal compound and a photopolymerization initiator. The photopolymerization initiator will be described later.

For example, the liquid crystal composition preferably includes 25% by mass or more of the cholesteric liquid crystal compound having one ethylenic unsaturated group and one cyclic ether group with respect to the total solid content of the liquid crystal composition. By including 25% by mass or more of the cholesteric liquid crystal compound having one ethylenic unsaturated group and one cyclic ether group with respect to the total solid content of the liquid crystal composition, it is easy to obtain characteristic that the elastic modulus of the reflective layer at the temperature of Tg of the plastic base material + 10°C in a film after fixing the cholesteric alignment state is within the range of 0.00001 GPa to 0.5 GPa.

The liquid crystal composition may further contain other components such as a chiral agent, an alignment control agent, a polymerization initiator, and an alignment assistant.

-Cholesteric liquid crystal compound-

The cholesteric liquid crystal compound according to the claimed invention is a compound having one ethylenic unsaturated group and one cyclic ether group.

The ethylenic unsaturated group is not particularly limited, and examples thereof include a (meth)acryloxy

group, a (meth)acrylamide group, a vinyl group, a vinyl ester group, and a vinyl ether group.

Among these, from the viewpoint of reactivity, a (meth)acryloxy group, a (meth)acrylamide group, or a vinyl group is preferable, a (meth)acryloxy group or a (meth)acrylamide group is more preferable, and a (meth)acryloxy group is particularly preferable.

The cyclic ether group is not particularly limited, but from the viewpoint of reactivity, an epoxy group or an oxetanyl group is preferable, and an oxetanyl group is particularly preferable.

From the viewpoint of reactivity and moldability, the cholesteric liquid crystal compound is a compound having one ethylenic unsaturated group, and it is more preferable to include, with respect to the total solid content of the liquid crystal composition, 25% by mass of a cholesteric liquid crystal compound having one ethylenic unsaturated group.

The cholesteric liquid crystal compound having one ethylenic unsaturated group and one cyclic ether group has both the ethylenic unsaturated group and the cyclic ether group in one molecule. In addition, in a case where the number of ethylenic unsaturated groups is 1, for example, the cholesteric liquid crystal compound may be a compound having one ethylenic unsaturated group and one or more cyclic ether groups.

From the viewpoint of moldability, it is preferable to include a radical polymerization initiator, and more preferable to include a photoradical polymerization initiator.

From the viewpoint of moldability, it is preferable to include a cationic polymerization initiator, and more preferable to include a photocationic polymerization initiator.

Furthermore, from the viewpoint of moldability, the above-described cholesteric liquid crystal compound is a compound having both ethylenic unsaturated group and cyclic ether group, and more preferably a compound having one ethylenic unsaturated group and one cyclic ether group.

It is sufficient that the cholesteric liquid crystal compound having one ethylenic unsaturated group and one cyclic ether group is a compound having a liquid crystal structure, and the cholesteric liquid crystal compound having one ethylenic unsaturated group and one cyclic ether group may be a rod-like liquid crystal compound or a disk-like liquid crystal compound.

Among these, from the viewpoint of ease of adjusting the pitch of the helical structure in the cholesteric liquid crystal layer, post-molding property, and designability, the cholesteric liquid crystal compound is preferably a rod-like liquid crystal compound.

As the rod-like liquid crystal compound, an azomethine compound, an azoxy compound, a cyano biphenyl compound, a cyanophenyl ester compound, a benzoic acid ester compound, a cyclohexane carboxylic acid phenyl ester compound, a cyanophenyl cyclohexane compound, a cyano-substituted phenyl pyrimidine compound, an alkoxy-substituted phenyl pyrimidine compound, a phenyl dioxane compound, a tolane compound, or an alkenylcyclohexylbenzonitrile compound is preferably used. In addition to the above-described low-molecular weight liquid crystal compounds, a liquid crystalline polymer compound can also be used.

The above-described cholesteric liquid crystal layer is more preferably a layer in which the alignment is fixed by polymerizing a rod-like liquid crystal compound.

As the rod-like liquid crystal compound, a compound having one ethylenic unsaturated group and one cyclic ether group, among compounds described in Makromol. Chem., vol. 190, p. 2255 (1989), Advanced Materials, vol. 5, p. 107 (1993), US4683327A, US5622648A, US5770107A, WO1995/22586A, WO1995/24455A, WO1997/00600A, WO1998/23580A, WO1998/52905A, JP1989-272551A (JP-H01-272551A), JP1994-16616A (JP-H06-016616A), JP1995-110469A (JP-H07-110469A), JP1999-80081A (JP-H11-080081A), JP2001-328973A, and the like, can be used. Furthermore, as the rod-like liquid crystal compound, for example, a compound having one ethylenic unsaturated group and one cyclic ether group, among compounds described in JP1999-513019A (JP-H11-513019A) and JP2007-279688A, can also be preferably used.

As the disk-like liquid crystal compound, for example, a compound having one ethylenic unsaturated group and one cyclic ether group, among compounds described in JP2007-108732A and JP2010-244038A, can be preferably used.

Specific examples of cholesteric liquid crystal compounds having one ethylenic unsaturated group or one cyclic ether group include compounds shown below, but only cholesteric liquid crystal compounds having one ethylenic unsaturated group and one cyclic ether group are according to the claimed invention.

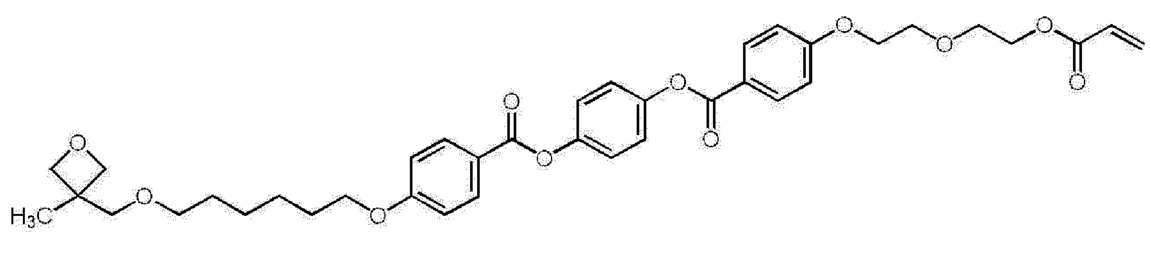

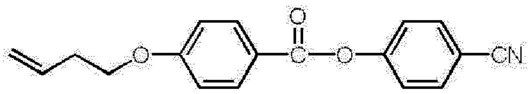

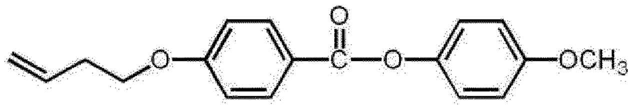

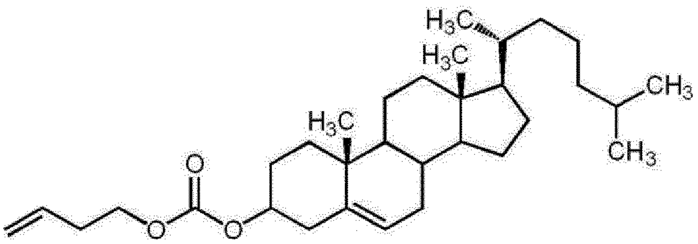

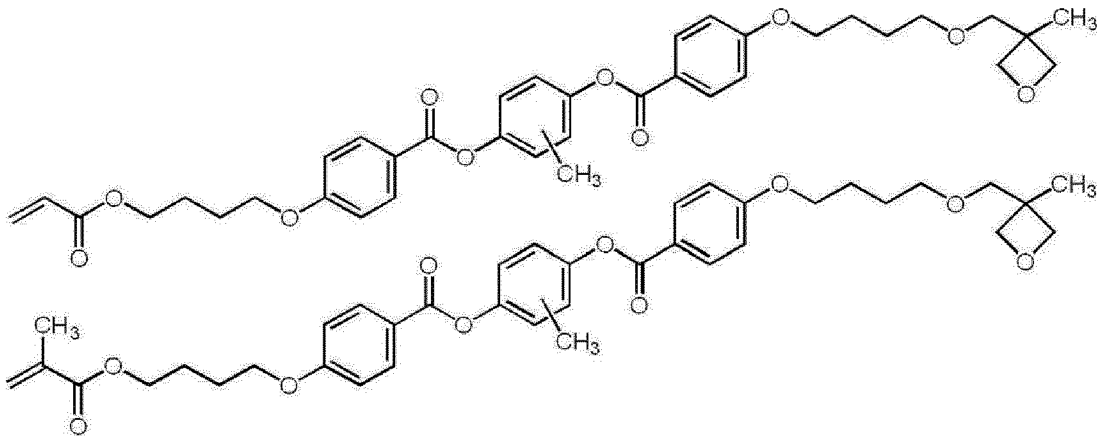

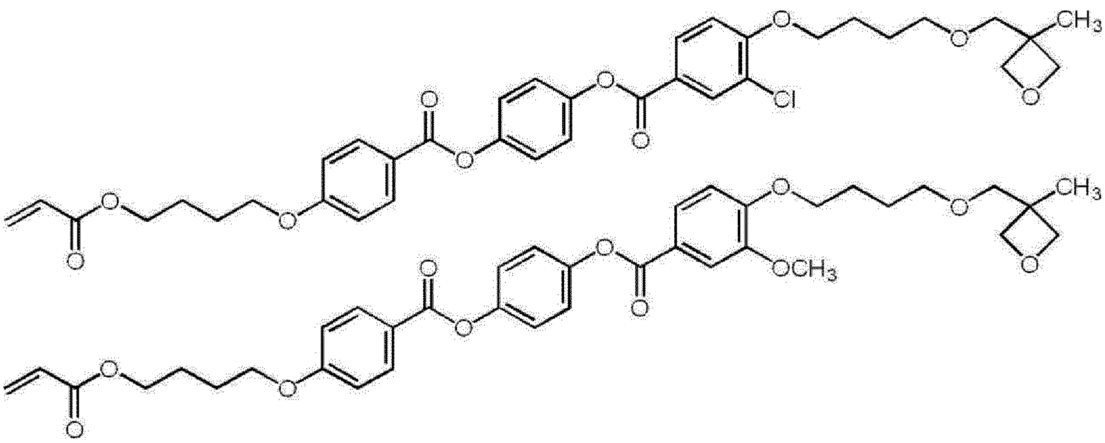

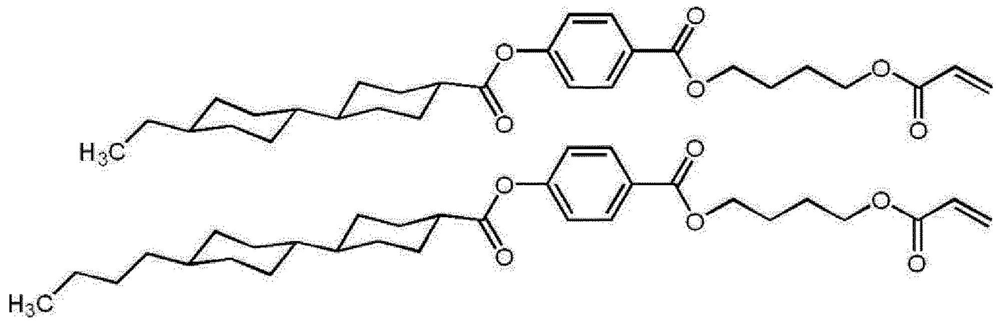

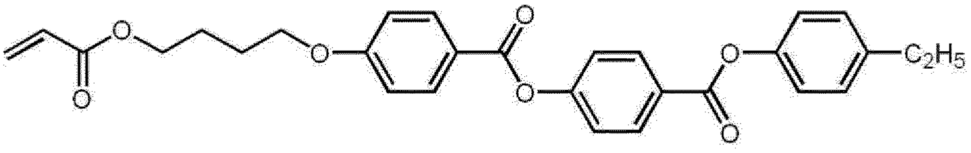

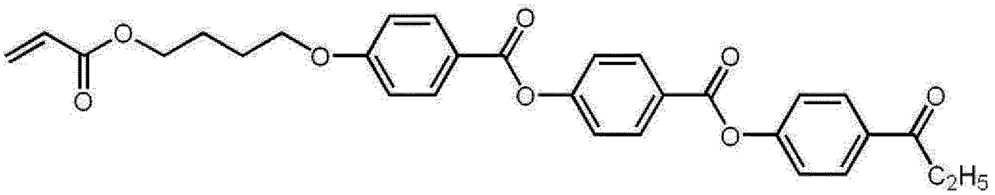

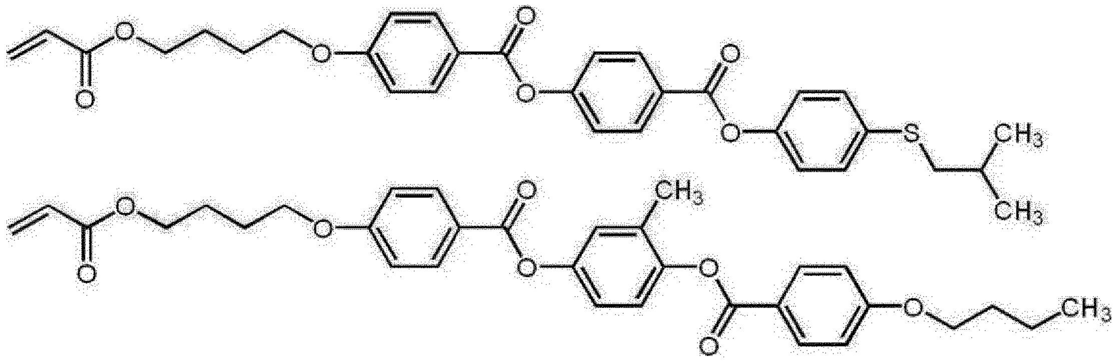

The above-described liquid crystal composition includes the cholesteric liquid crystal compound having one ethylenic unsaturated group and one cyclic ether group alone, or may include two or more thereof.

The content of the cholesteric liquid crystal compound having one ethylenic unsaturated group and one cyclic ether group is preferably 25% by mass or more with respect to the total solid content of the liquid crystal composition. In a case where the content thereof is 25% by mass or more, a decorative film having excellent moldability is obtained.

In addition, from the viewpoint of moldability, the content of the cholesteric liquid crystal compound having one ethylenic unsaturated group or one cyclic ether group is preferably 30% by mass or more, more preferably 40% by mass or more, still more preferably 60% by mass to 99% by mass, and particularly preferably 80% by mass to 98% by mass.

-Other cholesteric liquid crystal compound-

The above-described liquid crystal composition may include a cholesteric liquid crystal compound (hereinafter, also simply referred to as "other liquid crystal compounds") other than the cholesteric liquid crystal compound having one ethylenic unsaturated group and one cyclic ether group.

Examples of other liquid crystal compounds include cholesteric liquid crystal compounds having no ethylenic unsaturated group and cyclic ether group, cholesteric liquid crystal compounds having two or more ethylenic unsaturated groups and no cyclic ether group, cholesteric liquid crystal compounds having two or more cyclic ether groups and no ethylenic unsaturated group, and cholesteric liquid crystal compounds having two or more ethylenic unsaturated groups and two or more cyclic ether groups.

Among these, from the viewpoint of moldability, other liquid crystal compounds are preferably at least one

compound selected from the group consisting of cholesteric liquid crystal compounds having no ethylenic unsaturated group and cyclic ether group, cholesteric liquid crystal compounds having two or more ethylenic unsaturated groups and no cyclic ether group, or cholesteric liquid crystal compounds having two or more cyclic ether groups and no ethylenic unsaturated group, more preferably at least one compound selected from the group consisting of cholesteric liquid crystal compounds having no ethylenic unsaturated group and cyclic ether group, cholesteric liquid crystal compounds having two ethylenic unsaturated groups and no cyclic ether group, or cholesteric liquid crystal compounds having two cyclic ether groups and no ethylenic unsaturated group, and particularly preferably at least one compound selected from the group consisting of cholesteric liquid crystal compounds having no ethylenic unsaturated group and cyclic ether group or cholesteric liquid crystal compounds having two ethylenic unsaturated groups and no cyclic ether group.

From the viewpoint that the elastic modulus of the reflective layer at a temperature of the glass transition temperature (Tg) of the plastic base material + 10°C is set to 0.00001 GPa or more, the content of the cholesteric liquid crystal compound having no ethylenic unsaturated group and cyclic ether group is preferably 50% by mass or less, more preferably 30% by mass or less, and still more preferably 15% by mass or less with respect to the total solid content of the liquid crystal composition.

From the viewpoint that the elastic modulus of the reflective layer at a temperature of the glass transition temperature (Tg) of the plastic base material + 10°C is set to 0.5 GPa or less, the content of the cholesteric liquid crystal compound having two ethylenic unsaturated groups and no cyclic ether group and the cholesteric liquid crystal compound having two cyclic ether groups and no ethylenic unsaturated group is preferably 80% by mass or less, more preferably 65% by mass or less, and particularly preferably 50% by mass or less with respect to the total solid content of the liquid crystal composition.

From the viewpoint that the elastic modulus of the reflective layer at a temperature of the glass transition temperature (Tg) of the plastic base material + 10°C is set to 0.5 GPa or less, the content of the cholesteric liquid crystal compound having three or more ethylenic unsaturated groups and no cyclic ether group and the cholesteric liquid crystal compound having three cyclic ether groups and no ethylenic unsaturated group is preferably 50% by mass or less, more preferably 30% by mass or less, and particularly preferably 10% by mass or less with respect to the total solid content of the liquid crystal composition.

As the other liquid crystal compounds, a known cholesteric liquid crystal compound can be used.

As the polymerizable rod-like liquid crystal compound in the other liquid crystal compounds, compounds described in Makromol. Chem., vol. 190, p. 2255 (1989), Advanced Materials, vol. 5, p. 107 (1993), US4683327A, US5622648A, US5770107A, WO1995/22586A, WO1995/24455A, WO1997/00600A, WO1998/23580A, WO1998/52905A, JP1989-272551A (JP-H01-272551A), JP1994-16616A (JP-H06-16616A), JP1995-110469A (JP-H07-110469A), JP1999-80081A (JP-H11-80081A), JP2001-328973A, and the like can be used. Furthermore, as the rod-like liquid crystal compound, for example, compounds described in JP1999-513019A (JP-H11-513019A) or JP2007-279688A can also be preferably used.

As the disk-like liquid crystal compound in the other liquid crystal compounds, for example, compounds described in JP2007-108732A or JP2010-244038A can be preferably used.

The above-described liquid crystal composition may include other liquid crystal compound alone, or may include two or more other liquid crystal compounds.

From the viewpoint of moldability, with respect to the total solid content of the liquid crystal composition, the content of the other liquid crystal compounds is preferably 70% by mass or less, more preferably 60% by mass or less, still more preferably 40% by mass or less, and particularly preferably 30% by mass or less. The lower limit value of the content of the other liquid crystal compounds is 0% by mass.

-Chiral agent (optically active compound)-

From the viewpoint of ease of forming a cholesteric liquid crystal layer and ease of adjusting the pitch of the helical structure, the above-described liquid crystal composition preferably includes a chiral agent (optically active compound).

The chiral agent has a function of inducing a helical structure in the cholesteric liquid crystal layer.

Since the twist direction or helical pitch of the helix induced by the chiral agent is different depending on the liquid crystal compound, the chiral agent may be selected according to the purpose.

The chiral agent is not particularly limited, and a known compound (for example, a chiral agent for twisted nematic (TN) and super-twisted nematic (STN), described in Liquid Crystal Device Handbook, Chapter 3, Section 4-3, p. 199, Japan Society for the Promotion of Science edited by the 142nd committee, 1989), an isosorbide or isomannide derivative, or the like can be used.

The chiral agent generally includes an asymmetric carbon atom, but an axially asymmetric compound or a surface asymmetric compound, which does not have the asymmetric carbon atom, can also be used as the chiral agent.

Preferred examples of the axially asymmetric compound or the surface asymmetric compound include a binaphthyl compound, a helicene compound, and a paracyclophane compound.

From the viewpoint of moldability, the above-described liquid crystal composition preferably includes, as the chiral agent, a chiral agent having a polymerizable group, and more preferably includes, as the chiral agent, a chiral agent having a polymerizable group and a chiral agent not having a polymerizable group.

The polymerizable group is not particularly limited as long as the group is polymerizable, but from the viewpoint of reactivity and viewpoint of moldability, the polymerizable group is preferably an ethylenic unsaturated group or a cyclic ether group, and more preferably an ethylenic unsaturated group.

Preferred aspects of the ethylenic unsaturated group and cyclic ether group in the chiral agent are the same as the preferred aspects of the ethylenic unsaturated group and cyclic ether group in the above-described cholesteric liquid crystal compound, respectively.

In addition, in a case where the chiral agent has an ethylenic unsaturated group or a cyclic ether group, from the viewpoint of reactivity and viewpoint of moldability, it is preferable that the ethylenic unsaturated group or cyclic ether group included in the cholesteric liquid crystal compound of the above-described liquid crystal composition has the same type of the ethylenic unsaturated group or cyclic ether group included in the chiral agent (for example, an ethylenic unsaturated group, preferably a (meth)acryloxy group), and it is more preferable to be the same group.

Furthermore, from the viewpoint of reactivity and viewpoint of moldability, the chiral agent having a polymerizable group is preferably a chiral agent having two or more polymerizable groups, more preferably a chiral agent having two or more ethylenic unsaturated groups or a chiral agent having two or more cyclic ether groups, and particularly preferably a chiral agent having two or more ethylenic unsaturated groups.

In addition, the chiral agent may be a cholesteric liquid crystal compound.

As will be described later, in a case of controlling the size of the helical pitch of the cholesteric liquid crystal layer by irradiating the cholesteric liquid crystal layer with light during manufacturing of the cholesteric liquid crystal layer, it is preferable to include a chiral agent (hereinafter, also referred to as a "photosensitive chiral agent") capable of changing the helical pitch of the cholesteric liquid crystal layer in response to light.

The photosensitive chiral agent is a compound in which the structure can be changed by absorbing light, thereby being capable of changing the helical pitch of the cholesteric liquid crystal layer. As such a compound, a compound which causes at least one of a photoisomerization reaction, a photodimerization reaction, or a photodegradation reaction is preferable.

The compound which causes a photoisomerization reaction refers to a compound which causes stereoisomerization or structural isomerization by the action of light. Examples of the photoisomerization compound include an azobenzene compound and a spiropyran compound.

In addition, the compound which causes a photodimerization reaction refers to a compound which causes an addition reaction between two groups so as to be cyclized by irradiation with light. Examples of the photodimerization compound include a cinnamic acid derivative, a coumarin derivative, a chalcone derivative, and a benzophenone derivative.

In addition, the light is not particularly limited, and examples thereof include ultraviolet light, visible light, and infrared light.

Preferred examples of the above-described photosensitive chiral agent include a chiral agent represented by Formula (CH1). The chiral agent represented by Formula (CH1) can change the alignment structure such as the helical pitch (helical cycle and twist cycle) of a cholesteric liquid crystalline phase according to the amount of light during irradiation with light.

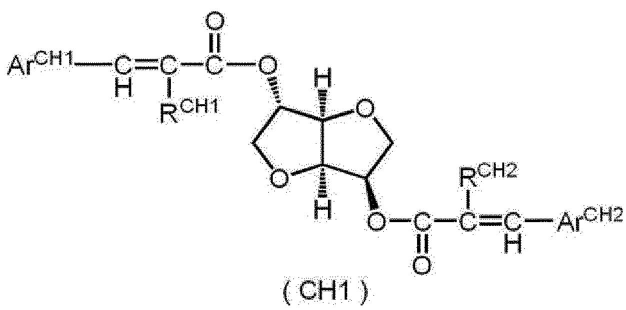

(CH1)

In Formula (CH1), $Ar^{CH1}$ and $Ar^{CH2}$ each independently represent an aryl group or a heteroaromatic ring group, and $R^{CH1}$ and $R^{CH2}$ each independently represent a hydrogen atom or a cyano group.

In Formula (CH1), it is preferable that $Ar^{CH1}$ and $Ar^{CH2}$ are each independently an aryl group.

The aryl group of $Ar^{CH1}$ and $Ar^{CH2}$ in Formula (CH1) may have a substituent, and the aryl group thereof preferably has a total carbon number of 6 to 40, and more preferably has a total carbon number of 6 to 30. As the

substituent, for example, a halogen atom, an alkyl group, an alkenyl group, an alkynyl group, an alkoxy group, a hydroxy group, an acyl group, an alkoxycarbonyl group, an aryloxycarbonyl group, an acyloxy group, a carboxy group, a cyano group, or a heterocyclic group is preferable, and a halogen atom, an alkyl group, an alkenyl group, an alkoxy group, a hydroxy group, an acyloxy group, an alkoxycarbonyl group, or an aryloxycarbonyl group is more preferable.

In Formula (CH1), it is preferable that $R^{CH1}$ and $R^{CH2}$ are each independently a hydrogen atom.

Among these, as $Ar^{CH1}$ and $Ar^{CH2}$, an aryl group represented by Formula (CH2) or Formula (CH3) is preferable.

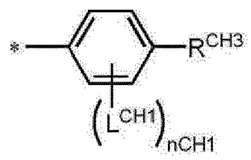
( CH2 )

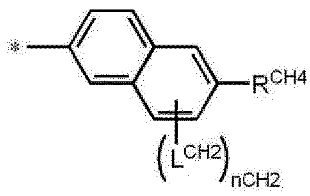
( CH3 )

In Formula (CH2) and Formula (CH3), $R^{CH3}$ and $R^{CH4}$ each independently represent a hydrogen atom, a halogen atom, an alkyl group, an alkenyl group, an alkynyl group, an aryl group, a heterocyclic group, an alkoxy group, a hydroxy group, an acyl group, an alkoxycarbonyl group, an aryloxycarbonyl group, an acyloxy group, a carboxy group, or a cyano group, $L^{CH1}$ and $L^{CH2}$ each independently represent a halogen atom, an alkyl group, an alkoxy group, or a hydroxy group, nCH1 represents an integer of 0 to 4, nCH2 represents an integer of 0 to 6, and * represents a bonding position with the ethylene unsaturated bond in Formula (CH1).

In Formula (CH2) and Formula (CH3), $R^{CH3}$ and $R^{CH4}$ are each independently preferably a hydrogen atom, a halogen atom, an alkyl group, an alkenyl group, an aryl group, an alkoxy group, a hydroxy group, an alkoxycarbonyl group, an aryloxycarbonyl group, or an acyloxy group, more preferably an alkoxy group, a hydroxy group, or an acyloxy group, and particularly preferably an alkoxy group.

In Formula (CH2) and Formula (CH3), $L^{CH1}$ and $L^{CH2}$ are each independently preferably an alkoxy group having 1 to 10 carbon atoms, or a hydroxy group.

nCH1 in Formula (CH2) is preferably 0 or 1.

nCH2 in Formula (CH3) is preferably 0 or 1.

The heteroaromatic ring group of $Ar^{CH1}$ and $Ar^{CH2}$ in Formula (CH1) may have a substituent, and the heteroaromatic ring group thereof preferably has a total carbon number of 4 to 40, and more preferably has a total carbon number of 4 to 30. As the substituent, for example, a halogen atom, an alkyl group, an alkenyl group, an alkynyl group, an aryl group, an alkoxy group, a hydroxy group, an acyl group, an alkoxycarbonyl group, an aryloxycarbonyl group, an acyloxy group, or a cyano group is preferable, and a halogen atom, an alkyl group, an alkenyl group, an aryl group, an alkoxy group, or an acyloxy group is more preferable.

As the heteroaromatic ring group, a pyridyl group, a pyrimidinyl group, a furyl group, or a benzofuranyl group is preferable, and a pyridyl group or a pyrimidinyl group is more preferable.

The above-described liquid crystal composition may include one chiral agent alone, or may include two or more chiral agents.

The content of the chiral agent can be appropriately selected according to the desired pitch of the structure or helical structure of the cholesteric liquid crystal compound to be used. However, from the viewpoint of ease of forming a cholesteric liquid crystal layer and ease of adjusting the pitch of the helical structure, and viewpoint of moldability, the content of the chiral agent is preferably 1% by mass to 20% by mass, more preferably 2% by mass to 15% by mass, and particularly preferably 3% by mass to 10% by mass with respect to the total solid content of the above-described liquid crystal composition.

In addition, in a case of containing a chiral agent having a polymerizable group as the chiral agent, from the viewpoint of moldability, the content of the chiral agent having a polymerizable group is preferably 0.2% by mass to 15% by mass, more preferably 0.5% by mass to 10% by mass, still more preferably 1% by mass to 8% by mass, and particularly preferably 1.5% by mass to 5% by mass with respect to the total solid content of the above-described liquid crystal composition.

Furthermore, in a case of containing a chiral agent not having a polymerizable group as the chiral agent, from the viewpoint of moldability, the content of the chiral agent not having a polymerizable group is preferably 0.2% by mass to 20% by mass, more preferably 0.5% by mass to 15% by mass, and particularly preferably 1.5% by mass to 10% by mass with respect to the total solid content of the above-described liquid crystal composition.

In addition, the pitch of the helical structure of the cholesteric liquid crystal in the cholesteric liquid crystal layer, and the selective reflection wavelength and its range described later can be easily adjusted by changed not only by adjusting the type of the liquid crystal compound used but also by adjusting the content of the chiral agent. Although it

cannot be said unconditionally, in a case where the content of the chiral agent in the liquid crystal composition is doubled, the above-described pitch may be halved and the center value of the above-described selective reflection wavelength may be halved.

-Polymerization initiator-

The liquid crystal composition preferably includes a polymerization initiator, and more preferably includes a photopolymerization initiator.

In addition, in a case where the above-described liquid crystal composition includes the cholesteric liquid crystal compound having one ethylenic unsaturated group, from the viewpoint of moldability, the above-described liquid crystal composition preferably includes a radical polymerization initiator, and more preferably includes a photoradical polymerization initiator.

Furthermore, in a case where the above-described liquid crystal composition includes the cholesteric liquid crystal compound having one cyclic ether group, from the viewpoint of moldability, the above-described liquid crystal composition preferably includes a cationic polymerization initiator, and more preferably includes a photocationic polymerization initiator.

In addition, it is preferable that the above-described liquid crystal composition includes only one of the radical polymerization initiator or the cationic polymerization initiator as the polymerization initiator.

As the polymerization initiator, a known polymerization initiator can be used.

In addition, the polymerization initiator is preferably a photopolymerization initiator capable of initiating a polymerization reaction by ultraviolet irradiation.

Examples of the photopolymerization initiator include α-carbonyl compounds (described in US2367661A and US2367670A), acyloin ether compounds (described in US2448828A), α-hydrocarbon-substituted aromatic acyloin compounds (described in US2722512A), polynuclear quinone compounds (described in US3046127A and US2951758A), combinations of triarylimidazole dimer and p-aminophenyl ketone (described in US3549367A), acridine compounds and phenazine compounds (described in JP1985-105667A (JP-S60-105667A) and US4239850A), and oxadiazole compounds (described in US4212970A).

In addition, as the photoradical polymerization initiator and the photocationic polymerization initiator, known initiators can be used.

Preferred examples of the photoradical polymerization initiator include α-hydroxyalkylphenone compounds, α-aminoalkylphenone compounds, and acylphosphine oxide compounds.

Furthermore, as the photocationic polymerization initiator, a known photocationic polymerization initiator can be used.

Preferred examples of the photocationic polymerization initiator include iodonium salt compounds and sulfonium salt compounds.

The above-described liquid crystal composition may include one polymerization initiator alone, or may include two or more polymerization initiators.

The content of the polymerization initiator can be appropriately selected according to the desired pitch of the structure and helical structure of the cholesteric liquid crystal compound to be used. However, from the viewpoint of ease of forming the cholesteric liquid crystal layer, ease of adjusting the pitch of the helical structure, polymerization rate, and strength of the cholesteric liquid crystal layer, the content of the polymerization initiator is preferably 0.05% by mass to 10% by mass, more preferably 0.05% by mass to 5% by mass, still more preferably 0.1% by mass to 2% by mass, and particularly preferably 0.2% by mass to 1% by mass with respect to the total solid content of the above-described liquid crystal composition.

-Crosslinking agent-

The above-described liquid crystal compound may include a crosslinking agent in order to improve the strength and durability of the cholesteric liquid crystal layer after curing. As the crosslinking agent, a crosslinking agent which cures the liquid crystal composition with ultraviolet rays, heat, humidity, and the like can be suitably used.

The crosslinking agent is not particularly limited and can be appropriately selected according to the purpose, and examples thereof include polyfunctional acrylate compounds such as trimethylolpropane tri(meth)acrylate and pentaerythritol tri(meth)acrylate; epoxy compounds such as glycidyl (meth)acrylate and ethylene glycol diglycidyl ether; aziridine compounds such as 2,2-bishydroxymethylbutanol-tris[3-(1-aziridinyl)propionate] and 4,4-bis(ethyleneiminocarbonylamino); isocyanate compounds such as hexamethylene diisocyanate and biuret-type isocyanate; polyoxazoline compounds having an oxazoline group in the side chain; and alkoxysilane compounds such as vinyltrimethoxysilane and N-(2-aminoethyl) 3-aminopropyltrimethoxysilane. In addition, a known catalyst can be used depending on reactivity of the crosslinking agent, and in addition to improving the strength and durability of the cholesteric liquid crystal layer,

productivity can be improved.

The above-described liquid crystal composition may include one crosslinking agent alone, or may include two or more chiral agents.

From the viewpoint of the strength and durability of the cholesteric liquid crystal layer, the content of the crosslinking agent is preferably 1% by mass to 20% by mass and more preferably 3% by mass to 15% by mass with respect to the total solid content of the above-described liquid crystal composition.

-Polyfunctional polymerizable compound-

From the viewpoint of moldability, the above-described liquid crystal composition also preferably includes a polyfunctional polymerizable compound and more preferably includes a polyfunctional polymerizable compound having the same type of polymerizable group.

Examples of the polyfunctional polymerizable compound include, in the above-described compounds, cholesteric liquid crystal compounds having two or more ethylenic unsaturated groups and no cyclic ether group; cholesteric liquid crystal compounds having two or more cyclic ether groups and no ethylenic unsaturated group; cholesteric liquid crystal compounds having two or more ethylenic unsaturated groups and two or more cyclic ether groups; chiral agents having two or more polymerizable groups; and the above-described crosslinking agent.

Among these, as the polyfunctional polymerizable compound, at least one compound selected from the group consisting of cholesteric liquid crystal compounds two or more ethylenic unsaturated groups and no cyclic ether group, cholesteric liquid crystal compounds having two cyclic ether groups and no ethylenic unsaturated group, and chiral agents having two or more polymerizable groups is preferable, and chiral agents having two or more polymerizable groups are more preferable.

The above-described liquid crystal composition may include one polyfunctional polymerizable compound alone, or may include two or more polyfunctional polymerizable compounds.

From the viewpoint of moldability, the content of the polyfunctional polymerizable compound is preferably 0.5% by mass to 70% by mass, more preferably 1% by mass to 50% by mass, still more preferably 1.5% by mass to 20% by mass, and particularly preferably 2% by mass to 10% by mass with respect to the total solid content of the above-described liquid crystal composition.

-Other additives-

The above-described liquid crystal composition may include other additives other than those described above as necessary.

As other additives, a known additive can be used, and examples thereof include a surfactant, a polymerization inhibitor, an antioxidant, a horizontal alignment agent, an ultraviolet absorber, a light stabilizer, a colorant, and metal oxide particles.

In addition, the above-described liquid crystal composition may include a solvent. The solvent is not particularly limited and can be selected according to the purpose, but an organic solvent is preferably used.

The organic solvent is not particularly limited and can be selected according to the purpose, and examples thereof include ketone-based solvents such as methyl ethyl ketone and methyl isobutyl ketone, alkyl halide-based solvents, amide-based solvents, sulfoxide-based solvents, heterocyclic compound-based solvents, hydrocarbon-based solvents, ester-based solvents, and ether-based solvents. The solvent may be used alone or in combination of two or more kinds thereof. Among these, in consideration of burden on the environment, a ketone-based solvent is particularly preferable. In addition, the above-described component may function as the solvent.

The content of the solvent in the above-described liquid crystal composition is not particularly limited, and may be adjusted to a content of the solvent such that a desired coatability is obtained.

The content of solid contents with respect to the total mass of the above-described liquid crystal composition is not particularly limited, but is preferably 1% by mass to 90% by mass, more preferably 5% by mass to 80% by mass, and particularly preferably 10% by mass to 80% by mass.

The content of the solvent in the liquid crystal composition during curing in a case of forming the above-described cholesteric liquid crystal layer is preferably 5% by mass or less, more preferably 3% by mass or less, still more preferably 2% by mass or less, and particularly preferably 1% by mass or less with respect to the total solid content of the above-described liquid crystal composition.

In addition, the content of the solvent in the cholesteric liquid crystal layer obtained by curing the above-described liquid crystal composition is preferably 5% by mass or less, more preferably 3% by mass or less, still more preferably 2% by mass or less, and particularly preferably 1% by mass or less with respect to the total mass of the above-described cholesteric liquid crystal layer.

-Coating and curing of liquid crystal composition-

The coating of the above-described liquid crystal composition can be performed by a method of applying a liquid crystal composition in a solution state with the solvent or a liquid matter after heating, such as molten product, according to an appropriate method such as a roll coating method, a gravure printing method, and a spin coating method. Furthermore, the coating can be performed according to various methods such as a wire bar coating method, an extrusion coating method, a direct gravure coating method, a reverse gravure coating method, and a die-coating method. In addition, using an inkjet device, the above-described liquid crystal composition can be discharged from a nozzle to form a coating film.

Thereafter, a cured cholesteric liquid crystal layer is preferably formed by curing the above-described liquid crystal composition. By the curing, the alignment state of molecules of the liquid crystal compound including the above-described cholesteric liquid crystal compound is maintained and fixed.

The curing is preferably performed by a polymerization reaction of polymerizable groups such as the ethylenic unsaturated group and the cyclic ether group in the liquid crystal compound.

In a case of using the above-described solvent, after the coating of the above-described liquid crystal composition and before the polymerization reaction for curing, it is preferable that the coating film is dried by a known method. For example, the coating film may be dried by allowing to stand or by heating.

It is sufficient that the liquid crystal compound in the above-described liquid crystal composition is aligned after the coating and drying of the above-described liquid crystal composition.

-Selective reflectivity of cholesteric liquid crystal layer-

The above-described cholesteric liquid crystal layer has selective reflectivity in a specific wavelength range.

In the present specification, the "center wavelength of a selective reflection wavelength" refers to an average value of two wavelengths indicating a half-value transmittance [$T^{1/2}$; %] expressed by the following expression, in a case where the minimum value and minimal value of the light transmittance of a target object (a member) is defined as Tmin (%), and the "having selective reflectivity" means having a specific wavelength range which satisfies the selective reflection wavelength. However, one wavelength of the two wavelengths is the maximum wavelength in a wavelength range including a wavelength shorter than the wavelength indicating Tmin, and the other wavelength of the two wavelengths in the minimum wavelength in the wavelength range including a wavelength longer than the wavelength indicating Tmin.

$$T^{1/2} = 100 - (100 - \mathrm{Tmin}) \div 2$$

The selective reflection wavelength in the cholesteric liquid crystal layer includes at least a layer having a wavelength in the range of 380 nm to 780 nm, but may include a layer having a wavelength in a range of near-infrared light (more than 780 nm and 2,000 nm or less.).

-Layer configuration of cholesteric liquid crystal layer-

The decorative film for molding according to the embodiment of the present disclosure may have two or more cholesteric liquid crystal layers.

In addition, each of the two or more cholesteric liquid crystal layers may be a layer having the same composition, or may be a layer having a different composition.

In addition, for example, in a case where the decorative film for molding according to the embodiment of the present disclosure has two or more cholesteric liquid crystal layers, from the viewpoint of suppressing change in reflectance after molding, it is preferable to have the cholesteric liquid crystal layer on each surface of the above-described base material.

-Thickness of cholesteric liquid crystal layer-

From the viewpoint of suppressing change in reflectance after molding, the thickness of the above-described cholesteric liquid crystal layer is preferably 0.3 μm to 15 μm, more preferably 0.5 μm to 9 μm, and particularly preferably 0.6 μm to 3 μm.

In a case of having two or more cholesteric liquid crystal layers, it is preferable that the cholesteric liquid crystal layers each independently have a thickness within the above-described thickness range.

<Alignment layer>

The decorative film for molding according to the embodiment of the present disclosure may have an alignment layer which is in contact with the above-described cholesteric liquid crystal layer. The alignment layer is used for aligning the molecules of the liquid crystal compound in the liquid crystal composition in a case of forming a layer including the liquid crystal compound.

The alignment layer is used in a case of forming a layer such as a liquid crystal layer, and the decorative film for molding according to the embodiment of the present disclosure may or may not include the alignment layer.

The alignment layer can be provided by a method of a rubbing treatment of an organic compound (preferably a polymer), an oblique vapor deposition of an inorganic compound such as SiO, a formation of a layer having a microgroove, and the like. Furthermore, an alignment layer in which an alignment function occurs by application of an electric field, application of a magnetic field, or light irradiation has also been known.

Depending on the material of an underlayer such as the base material and the cholesteric liquid crystal layer, the alignment layer may be provided, or the underlayer may be subjected to a direct alignment treatment (for example, rubbing treatment) to function as an alignment layer. Polyethylene terephthalate (PET) can be mentioned as an example of such a base material as the underlayer.

In addition, in a case where a layer is directly laminated on the cholesteric liquid crystal layer, the cholesteric liquid crystal layer as the underlayer may behave as the alignment layer and the liquid crystal compound for forming an upper layer can be aligned. In such a case, the liquid crystal compound in the upper layer can be aligned without providing the alignment layer or performing a special alignment treatment (for example, rubbing treatment).

The thickness of the alignment layer is not particularly limited, but is preferably in a range of 0.01 μm to 10 μm.

Hereinafter, as a preferred example, a rubbing-treated alignment layer which is used by subjecting a surface to a rubbing treatment, and a photoalignment layer will be described.

-Rubbing-treated alignment layer-

Examples of a polymer which can be used in the rubbing-treated alignment layer include a methacrylate-based copolymer, a styrene-based copolymer, polyolefin, polyvinyl alcohol and modified polyvinyl alcohol, poly(N-methylol acrylamide), polyester, polyimide, a vinyl acetate copolymer, carboxymethyl cellulose, and polycarbonate, which are described in paragraph 0022 of JP1996-338913A (JP-H08-338913A). A silane coupling agent can be used as the polymer. A water-soluble polymer (for example, poly(N-methylol acrylamide), carboxymethyl cellulose, gelatin, polyvinyl alcohol, and modified polyvinyl alcohol) is preferable, gelatin, polyvinyl alcohol, or modified polyvinyl alcohol is more preferable, and polyvinyl alcohol or modified polyvinyl alcohol is particularly preferable.

The molecules of the liquid crystal compound are aligned by coating a rubbing-treated surface of the alignment layer with the above-described liquid crystal composition. Thereafter, as necessary, by reacting the alignment layer polymer with a polyfunctional monomer contained in the cholesteric liquid crystal layer, or by crosslinking the alignment layer polymer using a crosslinking agent, the cholesteric liquid crystal layer can be formed.

-Rubbing treatment-

The surface of the alignment layer, the base material, or other layers, to be coated with the above-described liquid crystal composition, may be subjected to a rubbing treatment as necessary. The rubbing treatment can be generally performed by rubbing a surface of a film containing a polymer as a main component with paper or cloth in a certain direction. The general method of the rubbing treatment is described in, for example, "Handbook of Liquid crystals" (published by Maruzen, Oct. 30, 2000).

As a method of changing a rubbing density, the method described in "Handbook of Liquid crystals" (published by Maruzen) can be used. The rubbing density (L) is quantified by Expression (A).

$$\text{Expression (A): } L = NI(1 + 2\pi rn / 60v)$$

In Expression (A), N represents the number of times of rubbing, I represents a contact length of a rubbing roller, r represents a radius of the roller, n represents a rotation speed (revolutions per minute: rpm) of the roller, and v represents a stage moving speed (speed per second).

In order to increase the rubbing density, it is sufficient that the number of times of rubbing is increased, the contact length of the rubbing roller is increased, the radius of the roller is increased, the rotation speed of the roller is increased, or the stage moving speed is decreased. On the other hand, in order to decrease the rubbing density, it is sufficient that the reverse is carried out. In addition, with regard to conditions of the rubbing treatment, the description

in JP4052558B can be referred to.

-Photoalignment layer-

A photoalignment material used for the photoalignment layer formed by light irradiation is described in many references. Preferred examples thereof include azo compounds described in JP2006-285197A, JP2007-76839A, JP2007-138138A, JP2007-94071A, JP2007-121721A, JP2007-140465A, JP2007-156439A, JP2007-133184A, JP2009-109831A, JP3883848B, and JP4151746B; aromatic ester compounds described in JP2002-229039A; maleimide and/or alkenyl-substituted nadiimide compounds having a photo alignment unit, described in JP2002-265541A and JP2002-317013A; photo-crosslinkable silane derivatives described in JP4205195B and JP4205198B; and photo-crosslinkable polyimides, polyamides, or esters described in JP2003-520878A, JP2004-529220A, and JP4162850B. Azo compounds or photo-crosslinkable polyimides, polyamides, or esters are particularly preferable.

The photoalignment layer is produced by subjecting the photoalignment layer formed of the above-described material to an irradiation of linearly polarized light or non-polarized light.

In the present specification, the "irradiation of linearly polarized light" is an operation for causing a photo-reaction of the photoalignment material. The wavelength of the light used depends on the photoalignment material used, and is not particularly limited as long as a wavelength necessary for the photo-reaction. The peak wavelength of the light used for light irradiation is preferably 200 nm to 700 nm and the light is more preferably UV light having a peak wavelength of 400 nm or less.

Examples of a light source used for light irradiation include known light sources, for example, lamps such as a tungsten lamp, a halogen lamp, a xenon lamp, a xenon flash lamp, a mercury lamp, a mercury-xenon lamp, and a carbon arc lamp, various lasers (such as semiconductor laser, helium neon laser, argon ion laser, helium cadmium laser, and Yttrium Aluminum Garnet (YAG) laser), light emitting diodes, cathode ray tube, and the like.

As a method for obtaining the linearly polarized light, a method of using a polarizing plate (for example, iodine polarizing plate, dichroic coloring agent polarizing plate, and wire grid polarizing plate), a method of using a prismatic element (for example, Glan-Thomson prism) or a reflective type polarizer using Brewster's angle, or a method of using light emitted from a polarized laser light source can be adopted. In addition, by using a filter, a wavelength conversion element, or the like, only light having a required wavelength may be irradiated selectively.

In a case where the irradiated light is the linearly polarized light, a method of irradiating, from the upper surface or the back surface, the alignment layer with the light perpendicularly or obliquely to the surface of the alignment layer is exemplified. The incidence angle of the light varies depending on the photoalignment material, but is preferably 0° to 90° (perpendicular) and more preferably 40° to 90° with respect to the alignment layer.

In a case of using the non-polarized light, the non-polarized light is irradiated obliquely. The incidence angle of the light is preferably 10° to 80°, more preferably 20° to 60°, and particularly preferably 30° to 50°.

The irradiation time is preferably 1 minute to 60 minutes and more preferably 1 minute to 10 minutes.

<Circularly polarizing plate>

It is also preferable to dispose a circularly polarizing plate adjacent to the cholesteric liquid crystal layer. By disposing the circularly polarizing plate, a transparent decorative film which can give different visual effects on an observation surface can be obtained.

The circularly polarizing plate transmits circular polarization (levorotatory circularly polarized light) which is opposite to a revolution direction of circularly polarized light reflected by the cholesteric liquid crystal.

Examples of the circularly polarizing plate include a stack of a linearly polarizing plate and a λ/4 plate. As for the configuration in the circularly polarizing plate, for example, the λ/4 plate and the linearly polarizing plate are arranged in this order from the cholesteric liquid crystal layer side. The linearly polarizing plate and the λ/4 plate are arranged such that a slow axis of the λ/4 plate and a transmission axis of the linearly polarizing plate are aligned so that, among light incident from the λ/4 plate side, the levorotatory circularly polarized light is converted to linearly polarized light and transmitted. More specifically, the linearly polarizing plate and the λ/4 plate usually aligned so that the angle formed by the slow axis of the λ/4 plate and the transmission axis of the linearly polarizing plate is 45°.

<Colored layer>

The decorative film for molding according to the embodiment of the present disclosure may further have a colored layer. The position of the colored layer in the decorative film for molding according to the embodiment of the present disclosure is not particularly limited. The colored layer can be provided at a desired position, and preferred examples thereof include the following two aspects.

In one aspect, from the viewpoint of designability, it is preferable that the decorative film for molding according

to the embodiment of the present disclosure further has a colored layer between the base material and the cholesteric liquid crystal layer.

In another aspect, from the viewpoint of designability, molding processability, and durability, it is preferable that the decorative film for molding according to the embodiment of the present disclosure further has a colored layer on the above-described cholesteric liquid crystal layer on a side opposite to a side provided with the above-described base material.

The color of the colored layer is not limited, and can be appropriately selected depending on the application of the decorative film for molding, and the like. Examples of the color of the colored layer include black, gray, white, red, orange, yellow, green, blue, and violet. In addition, the color of the colored layer may be a metallic color.

From the viewpoint of strength and scratch resistance, the colored layer preferably includes a resin. Examples of the resin include a binder resin described later. In addition, the colored layer may be a layer formed by curing a polymerizable compound, or may be a layer including a polymerizable compound and a polymerization initiator.

The polymerizable compound and polymerization initiator are not particularly limited, and a known compound and initiator can be used.

-Colorant-

Examples of the colorant include a pigment and a dye, and from the viewpoint of durability, a pigment is preferable. In order to make the colored layer metallic, metal particles, pearl pigments, and the like can be applied, and methods such as vapor deposition and plating can also be adopted.

The pigment is not limited, and a known inorganic pigment, organic pigment, and the like can be applied.

Examples of the inorganic pigment include white pigments such as titanium dioxide, zinc oxide, lithopone, light calcium carbonate, white carbon, aluminum oxide, aluminum hydroxide, and barium sulfate; black pigments such as carbon black, titanium black, titanium carbon, iron oxide, and graphite; iron oxide; barium yellow; cadmium red; and chrome yellow.

As the inorganic pigment, inorganic pigments described in paragraph 0015 and paragraph 0114 of JP2005-7765A can also be applied.

Examples of the organic pigment include phthalocyanine-based pigments such as phthalocyanine blue and phthalocyanine green; azo-based pigments such as azo red, azo yellow, and azo orange; quinacridone-based pigments such as quinacridone red, cinquasia red, and cinquasia magenta; perylene pigments such as perylene red and perylene maroon; anthrapyridine; flavanthrone yellow; isoindoline yellow; indanthrone blue; dibromanzathrone red; anthraquinone red; and diketopyrrolopyrrole.

Specific examples of the organic pigment include red pigments such as C. I. Pigment Red 177, 179, 224, 242, 254, 255, and 264; yellow pigments such as C. I. Pigment Yellow 138, 139, 150, 180, and 185; orange pigments such as C. I. Pigment Orange 36, 38, and 71; green pigments such as C. I. Pigment Green 7, 36, and 58; blue pigments such as C. I. Pigment Blue 15:6; and violet pigments such as C. I. Pigment Violet 23.

As the organic pigment, organic pigments described in paragraph 0093 of JP2009-256572A can also be applied.

As the pigment, a pigment (so-called bright pigment) having a light-transmitting property and light-reflecting property may be included. Examples of the bright pigment include metallic bright pigments such as aluminum, copper, zinc, iron, nickel, tin, aluminum oxide, and alloys thereof, interference mica pigments, white mica pigments, graphite pigments, and glass flake pigments. The bright pigment may be uncolored or colored.

In a case where exposure is performed in the molding of the decorative film for molding, the bright pigment is preferably used in a range which does not hinder the curing by exposure.

The colorant may be used alone or in combination of two or more kinds thereof.

In addition, in a case where two or more kinds of colorants are used, the inorganic pigment and the organic pigment may be used in combination.

From the viewpoint of a target color development and molding suitability, the content of the colorant in the colored layer is preferably 1% by mass to 50% by mass, more preferably 5% by mass to 50% by mass, and particularly preferably 10% by mass to 40% by mass with respect to the total mass of the colored layer.

-Dispersant-

From the viewpoint of improving dispersibility of the colorant included in the colored layer, particularly the pigment, the colored layer may contain a dispersant. By containing the dispersant, dispersibility of the colorant in the formed colored layer is improved, and the color of the decorative film to be obtained can be uniformized.

The dispersant can be appropriately selected and used according to the type, shape, and the like of the colorant, but is preferably a polymer dispersant.

Examples of the polymer dispersant include silicone polymers, acrylic polymers, and polyester polymers. In a

case where it is desired to impart heat resistance to the decorative film, silicone polymers such as a graft type silicone polymer are preferably used as the dispersant.

The weight-average molecular weight of the dispersant is preferably 1,000 to 5,000,000, more preferably 2,000 to 3,000,000, and particularly preferably 2,500 to 3,000,000. In a case where the weight-average molecular weight is 1,000 or more, dispersibility of the colorant is further improved.

As the dispersant, a commercially available product may be used. Examples of the commercially available product include EFKA 4300 (acrylic polymer dispersant) manufactured by BASF Japan; HOMOGENOL L-18, HOMOGENOL L-95, and HOMOGENOL L-100 manufactured by Kao Corporation; Solsperse 20000 and Solsperse 24000 manufactured by Lubrizol Corporation; and DISPERBYK-110, DISPERBYK-164, DISPERBYK-180, and DISPERBYK-182 manufactured by BYK Chemie Japan. Note that, "HOMOGENOL", "Solsperse", and "DISPERBYK" are all registered trademarks.

The dispersant may be used alone or in combination of two or more kinds thereof.

The content of the dispersant in the colored layer is preferably 1 part by mass to 30 parts by mass with respect to 100 parts by mass of the colorant.

-Binder resin-

From the viewpoint of proper molding, the colored layer preferably contains a binder resin.

The binder resin is not limited, and a known resin can be applied. From the viewpoint of obtaining a desired color, as the binder resin, a transparent resin is preferable, and specifically, a resin having a total light transmittance of 80% or more is preferable. The total light transmittance can be measured by a spectrophotometer (for example, spectrophotometer UV-2100 manufactured by Shimadzu Corporation).

The binder resin is not limited, and a known resin can be applied. Examples of the binder resin include acrylic resins, silicone resins, polyesters, polyurethanes, and polyolefins. The binder resin may be a homopolymer of a specific monomer or a copolymer of the specific monomer and another monomer.

The binder resin may be used alone or in combination of two or more kinds thereof.

From the viewpoint of molding processability, the content of the binder resin in the colored layer is preferably 5% by mass to 70% by mass, more preferably 10% by mass to 60% by mass, and particularly preferably 20% by mass to 60% by mass with respect to the total mass of the colored layer.

-Additive-

The colored layer may contain an additive as necessary, in addition to the above-described components. The additive is not limited, and a known additive can be applied. Examples of the additive include surfactants described in paragraph 0017 of JP4502784B and paragraphs 0060 to 0071 of JP2009-237362A, thermal polymerization inhibitor described in paragraph 0018 of JP4502784B (also referred to as a polymerization inhibitor; preferred examples thereof include phenothiazine), and other additives described in paragraphs 0058 to 0071 of JP2000-310706.

-Method for forming colored layer-

Examples of a method for forming the colored layer include a method of using a composition for forming the colored layer, and a method of attaching colored films to each other. Among the above, as a method for forming the colored layer, a method of using a composition for forming the colored layer is preferable. In addition, the colored layer may be formed by using a commercially available paint such as Nax REAL series, Nax Admila series, and Nax Multi series (manufactured by NIPPONPAINT Co., Ltd.) and RETAN PG series (manufactured by Kansai Paint Co., Ltd.).

Examples of the method of using the composition for forming the colored layer include a method of applying the composition for forming the colored layer to form a colored layer, and a method of printing the composition for forming the colored layer to form a colored layer. Examples of the printing method include screen printing, inkjet printing, flexographic printing, gravure printing, and offset printing.

The composition for forming the colored layer includes a colorant. In addition, the composition for forming the colored layer preferably includes an organic solvent, and may include each of the above-described components which can be contained in the colored layer.

The content of each of the above-described components which can be contained in the composition for forming the colored layer is preferably adjusted within a range of the amount in which, in the descriptions regarding the content of each of the above-described components in the colored layer, the "colored layer" is read as the "composition for forming the colored layer".

The organic solvent is not limited, and a known organic solvent can be applied. Examples of the organic solvent include ester compounds, ether compounds, ketone compounds, and aromatic hydrocarbon compounds.

The organic solvent may be used alone or in combination of two or more kinds thereof.

The content of the organic solvent in the composition for forming the colored layer is preferably 5% by mass to 90% by mass and more preferably 30% by mass to 70% by mass with respect to the total mass of the composition for forming the colored layer.

Examples of a method of preparing the composition for forming the colored layer include a method of mixing, for example, the organic solvent and components contained in the colored layer, such as the colorant. In addition, in a case where the composition for forming the colored layer includes a pigment as the colorant, from the viewpoint of improving uniform dispersibility and dispersion stability of the pigment, it is preferable to prepare the composition for forming the colored layer by using a pigment dispersion liquid including a pigment and a dispersant.

-Thickness of colored layer-

The thickness of the colored layer is not particularly limited, but from the viewpoint of visibility and three-dimensional moldability, is preferably 0.5 μm or more, more preferably 3 μm or more, still more preferably 3 μm to 50 μm, and particularly preferably 3 μm to 20 μm.

In a case of having two or more colored layers, it is preferable that the colored layers each independently have a thickness within the above-described thickness range.

<Protective layer>

The decorative film for molding according to the embodiment of the present disclosure may also have a protective layer.

The protective layer may be a layer having sufficient strength to protect the above-described cholesteric liquid crystal layer and the like, but is preferably a resin having excellent durability against light, heat, humidity, and the like.

In addition, from the viewpoint of visibility and black tightness (suppression of reflected glare by reflected light from the outside, for example, suppression of reflected glare of fluorescent lamp), the protective layer may be a protective layer having antireflection function.

From the viewpoint of durability, the protective layer preferably includes a resin, more preferably includes at least one resin selected from the group consisting of a siloxane resin, a fluororesin, a urethane resin, an acrylic resin, an ester resin, a melamine resin, and an olefin resin, and still more preferably includes at least one resin selected from the group consisting of a siloxane resin, a fluororesin, and a urethane resin.

The fluororesin is not particularly limited, but examples thereof include resins described in paragraphs 0076 to 0106 of JP2009-217258A paragraphs 0083 to 0127 of JP2007-229999A, and the like.

Examples of the fluororesin include a fluorinated alkyl resin in which a hydrogen atom in olefin is replaced by a fluorine atom, and include polytetrafluoroethylene, polychlorotrifluoroethylene, polyvinylidene fluoride, polyvinyl fluoride, perfluoroalkoxy alkane, a copolymer such as perfluoroethylene propene, ethylene tetrafluoroethylene, and a water-dispersed fluororesin dispersion copolymerized with an emulsifier and a component which enhances affinity with water. Specific examples of such a fluororesin include LUMIFLON and Obbligato manufactured by AGC Inc., ZEFFLE and NEOFLON manufactured by DAIKIN INDUSTRIES, LTD., Teflon (registered trademark) manufactured by Dupont, and KYNAR manufactured by ARKEMA.

In addition, for example, a compound having at least one group of polymerizable functional groups or crosslinking functional groups, and containing a fluorine atom may be used, and examples thereof include radically polymerizable monomers such as perfluoroalkyl (meth)acrylate, a vinyl fluoride monomer, and a vinylidene fluoride monomer, and cationically polymerizable monomers such as perfluorooxetane. Specific examples of such a fluorine compound include LINC3A manufactured by KYOEISHA CHEMICAL CO., LTD, OPTOOL manufactured by DAIKIN INDUSTRIES, LTD., OPSTAR manufactured by Arakawa Chemical Industries, Ltd., and tetrafluorooxetane manufactured by DAIKIN INDUSTRIES, LTD.

In the present disclosure, from the viewpoint of protecting the cholesteric liquid crystal layer, it is preferable to have a layer including an ultraviolet (UV) absorber on a viewing side outside the cholesteric liquid crystal layer. The ultraviolet absorber may be included in the protective layer or the base material, and a layer including the ultraviolet absorber (an ultraviolet absorbing layer) may be separately provided.

In the present disclosure, the ultraviolet absorber is a compound having an ultraviolet absorption and having a molecular weight of less than 5,000. In a case where the ultraviolet absorber has a molecular weight distribution, the above-described molecular weight refers to a weight-average molecular weight measured by the above-described method. In a case of not having a molecular weight distribution, the molecular weight is measured using electrospray ionization mass spectrometry (ESI-MS).

As the ultraviolet absorber, a compound having a maximal absorption wavelength of 380 nm or less is preferable, and a compound having a maximum absorption wavelength of 250 nm to 380 nm (particularly preferably 270 nm to 380

nm) is more preferable.

Examples of the ultraviolet absorber include triazine compounds, benzotriazole compounds, benzophenone compounds, salicylic acid compounds, and metal oxide particles.

From the viewpoint of the ultraviolet absorption, the ultraviolet absorber preferably includes a triazine compound or a benzotriazole compound, and more preferably includes a triazine compound.

The total content of the triazine compound and the benzotriazole compound in the ultraviolet absorber is preferably 80% by mass or more with respect to the total amount of the ultraviolet absorber.

In a case where a layer including the UV absorber is separately provided, the UV absorber is preferably included in a binder polymer. The binder is not particularly limited, but at least one selected from the group consisting of acrylic resin, polyester, polyurethane, polyolefin, siloxane resin, and fluoropolymer is preferable, at least one selected from the group consisting of acrylic resin, polyester, polyurethane, and polyolefin is more preferable, and an acrylic resin is still more preferable.

-Thickness of protective layer-

The thickness of the protective layer is not particularly limited, but from the viewpoint of wiping resistance and three-dimensional moldability, is preferably 2 μm or more, more preferably 4 μm or more, still more preferably 4 μm to 50 μm, and particularly preferably 4 μm to 20 μm.

<Pressure-sensitive adhesive layer>

From the viewpoint of easy attachment to other members (preferably, other molding members) and improvement of adhesiveness between layers, the decorative film for molding according to the embodiment of the present disclosure may have a pressure-sensitive adhesive layer.

The material of the pressure-sensitive adhesive layer is not particularly limited and can be suitably selected depending on the purpose.

Examples thereof include a layer containing a known pressure sensitive adhesive or adhesive.

-Pressure sensitive adhesive-

Examples of the pressure sensitive adhesive include an acrylic pressure sensitive adhesive, a rubber-based pressure sensitive adhesive, and a silicone-based pressure sensitive adhesive. In addition, examples of the pressure sensitive adhesive include acrylic pressure sensitive adhesives, ultraviolet (UV) curable pressure sensitive adhesives, and silicone-based pressure sensitive adhesives described in Chapters 2 of "Characterization evaluation of release paper, release film, and adhesive tape, and control technique thereof, 2004, Information Mechanism. The acrylic pressure sensitive adhesive refers to a pressure sensitive adhesive including a polymer ((meth)acrylicpolymer) of a (meth)acrylic monomer.

In a case of containing a pressure sensitive adhesive, the layer may further contain a viscosity imparting agent.

-Adhesive-

Examples of the adhesive include a urethane resin adhesive, a polyester adhesive, an acrylic resin adhesive, an ethylene vinyl acetate resin adhesive, a polyvinyl alcohol adhesive, a polyamide adhesive, and a silicone adhesive. From the viewpoint of higher adhesive force, a urethane resin adhesive or a silicone adhesive is preferable.

-Method for forming pressure-sensitive adhesive layer-

The method for forming the pressure-sensitive adhesive layer is not particularly limited, and examples thereof include a method of laminating a protective film on which the pressure-sensitive adhesive layer is formed, such that the pressure-sensitive adhesive layer and an adherend (for example, a surface of a cholesteric liquid crystal layer of a laminate having a base material and a cholesteric liquid crystal layer; the same applies hereinafter) are in contact with each other, a method of laminating the pressure-sensitive adhesive layer alone so as to contact with the adherend, and a method of coating the adherend with a composition including the above-described pressure sensitive adhesive or adhesive. Preferred examples of the laminating method or coating method include the same method as the above-described method of laminating the transparent film or the above-described coating method of the composition for forming the colored layer.

From the viewpoint of achieving both pressure sensitive adhesive force and handleability, the thickness of the pressure-sensitive adhesive layer in the decorative film is preferably 5 μm to 100 μm.

<Other layers>

The decorative film for molding according to the embodiment of the present disclosure may have other layers in addition to the above-described layers.
Examples of the other layers include a reflective layer, an ultraviolet absorbing layer, a self-repairing layer, an antistatic layer, an antifouling layer, an anti-electromagnetic wave layer, and a conductive layer, which are known as a layer for a decorative film.
The other layers in the decorative film for molding according to the embodiment of the present disclosure can be formed by known methods. Examples thereof include a method of applying a composition (composition for forming a layer) containing components included in these layers in a layered shape, and drying the composition.

-Cover film-

For the purpose of preventing stains, and the like, the decorative film for molding according to the embodiment of the present disclosure may have a cover film as an outermost layer.
The cover film is not particularly limited as long as the cover film is formed of a material having flexibility and good peelability, and examples thereof include resin films such as a polyethylene film.
The method for attaching the cover film is not particularly limited, and examples thereof include a known attaching method, such as a method of laminating the cover film on the protective layer.

-Method for manufacturing decorative film for molding-

The manufacturing of the decorative film for molding according to the embodiment of the present disclosure is not particularly limited as long as it is a method capable of manufacturing the decorative film for molding according to the embodiment of the present disclosure described above. The decorative film for molding according to the embodiment of the present disclosure is preferably manufactured by a method having a step of preparing a composition for forming a reflective layer and a step of forming a reflective layer which has a center wavelength of a selective reflection wavelength in a range of 380 nm to 780 nm and in which an elastic modulus of the reflective layer at a temperature of Tg of a plastic base material + 10°C is 0.00001 GPa to 0.5 GPa, and more preferably manufactured by a method having a step of preparing a liquid crystal composition, a step of applying the liquid crystal composition to a plastic base material to form a liquid crystal composition layer, and a step of curing the liquid crystal composition layer to form a cholesteric liquid crystal layer.
For example, the step of preparing a composition for forming a reflective layer may be a step of preparing a liquid crystal composition including a liquid crystal compound (preferably, a cholesteric liquid crystal compound), and the liquid crystal composition preferably further includes a cholesteric liquid crystal compound having a polymerizable group and a photopolymerization initiator to have curing properties.

<Step of preparing liquid crystal composition>

The method for manufacturing a decorative film for molding according to the embodiment of the present disclosure preferably includes a step of preparing the above-described liquid crystal composition.
Composition of each component of the liquid crystal composition in the step of preparing a liquid crystal composition is the same as that of the liquid crystal composition in the above-described decorative film for molding, except for aspects described later.

<Step of forming liquid crystal composition layer>

The method for manufacturing a decorative film for molding according to the embodiment of the present disclosure preferably includes a step of applying the above-described liquid crystal composition to a plastic base material to form a liquid crystal composition layer. The liquid crystal composition layer formed in this step may be a reflective layer which has a center wavelength of a selective reflection wavelength in a range of 380 nm to 780 nm and in which an elastic modulus of the reflective layer at a temperature of Tg of a plastic base material + 10°C is 0.00001 GPa to 0.5 GPa.
As the base material used in the step of forming a liquid crystal composition layer, the above-described base material can be suitably used.
As described above, the application of the liquid crystal composition can be performed by a method of applying a liquid crystal composition in a solution state with the solvent or a liquid matter after heating, such as molten product, according to an appropriate method such as a roll coating method, a gravure printing method, and a spin coating method. Furthermore, the application of the liquid crystal composition can be performed according to various methods such as

a wire bar coating method, an extrusion coating method, a direct gravure coating method, a reverse gravure coating method, and a die-coating method. In addition, in the application of the liquid crystal composition, using an inkjet device, the liquid crystal composition can be discharged from a nozzle to form a liquid crystal composition layer.

In a case of using the above-described solvent, after the application of the above-described liquid crystal composition and before the step of forming a cholesteric liquid crystal layer, it is preferable that the liquid crystal composition layer is dried by a known method. For example, the liquid crystal composition layer may be dried by allowing to stand or air-drying, or may be dried by heating.

The amount of the above-described liquid crystal composition to be applied may be appropriately set in consideration of the liquid crystal composition layer after drying.

In addition, it is preferable that the liquid crystal compound in the above-described liquid crystal composition are aligned after the application and drying of the above-described liquid crystal composition.

<Step of forming cholesteric liquid crystal layer>

The method for manufacturing a decorative film for molding according to the embodiment of the present disclosure preferably includes a step of curing the liquid crystal composition layer to form a cholesteric liquid crystal layer. By the curing, the alignment state of molecules of the liquid crystal compound including the cholesteric liquid crystal compound is maintained and fixed, thereby forming the cholesteric liquid crystal layer. As a result, a cholesteric liquid crystal layer which has a center wavelength of a selective reflection wavelength in a range of 380 nm to 780 nm and in which an elastic modulus of the reflective layer at a temperature of Tg of a plastic base material + 10°C is 0.00001 GPa to 0.5 GPa is formed as the reflective layer.

The curing of the liquid crystal composition layer is preferably performed by a polymerization reaction of polymerizable groups such as the ethylenic unsaturated group and the cyclic ether group in a compound included in the above-described liquid crystal compound.

Furthermore, the curing is preferably performed by exposure. In a case where the curing is performed by exposure, it is preferable that the above-described liquid crystal composition layer includes a photopolymerization initiator.

A light source for exposure can be appropriately selected and used according to the photopolymerization initiator. Preferred examples thereof include a light source capable of irradiating light in a wavelength range (for example, 365 nm or 405 nm). Specific examples of the light source include an ultra-high pressure mercury lamp, a high pressure mercury lamp, and a metal halide lamp.

The exposure amount is not particularly limited and may be set appropriately, but is preferably 5 $mJ/cm^2$ to 2,000 $mJ/cm^2$ and more preferably 10 $mJ/cm^2$ to 1,000 $mJ/cm^2$.

In addition, it is preferable to heat the liquid crystal compound in order to facilitate the arrangement of the liquid crystal compound during the curing by the above-described exposure. The heating temperature is not particularly limited and may be selected according to composition of the liquid crystal compound and liquid crystal composition to be used, and examples thereof include 60°C to 120°C.

In addition, not only the cholesteric liquid crystal layer is formed by the exposure, but also other layers such as the colored layer may also be cured by the exposure as necessary.

In addition, as the exposure method, for example, methods described in paragraphs 0035 to 0051 of JP2006-23696A can be suitably used in the present disclosure.

In addition, in a case where the above-described liquid crystal composition layer is cured by heat, the heating temperature and heating time are not particularly limited, and may be appropriately selected depending on a thermal polymerization initiator and the like to be used. For example, the heating temperature is preferably 60°C to 200°C, and the heating time is preferably 5 minutes to 2 hours. The heating unit is not particularly limited, and a known heating unit can be used. Examples thereof include a heater, an oven, a hot plate, an infrared lamp, and an infrared laser.

<Other steps>

The method for manufacturing a decorative film for molding according to the embodiment of the present disclosure may include any other steps, for example, a step of forming a colored layer, a step of forming an alignment layer, a step of forming a protective layer, a step of forming a pressure-sensitive adhesive layer, and the like, in addition to the above-described steps as desired. The formation of each of the above-described layers such as a colored layer can be performed by using the above-described method or a known method.

(Molding method and molded product)

The molding method according to the embodiment of the present disclosure is a molding method using the decorative film for molding according to the embodiment of the present disclosure, and is preferably a molding method

including a step of molding the decorative film for molding according to the embodiment of the present disclosure.

In addition, the molded product according to the embodiment of the present disclosure is a molded product obtained by molding the decorative film for molding according to the embodiment of the present disclosure, and is preferably a molded product manufactured by the molding method according to the embodiment of the present disclosure.

It is preferable that the molding method according to the embodiment of the present disclosure has a step of molding a film having the reflective layer which is provided on the plastic base material and has a center wavelength of a selective reflection wavelength in a range of 380 nm to 780 nm, such that, in a molded article to be molded, a maximum height T2 of a display surface of the display unit in a normal direction with respect to a maximum width T1 of the display surface in an in-plane direction has a relationship of $T2 > 0.02 \times T1$. In the molding method according to the embodiment of the present disclosure, it is more preferable to satisfy $T2 > 0.05 \times T1$, and still more preferable to satisfy $T2 > 0.1 \times T1$.

In a case where the molding method according to the embodiment of the present disclosure has the above-described relationship, a decorative molded article which expresses a uniform tint can be obtained regardless of the viewing angle. The effect is particularly revealed in a case where the decorative film has a mirror surface design having an average reflectivity of 30% or more in the range of 380 to 780 nm.

<Molding step>

The molding method according to the embodiment of the present disclosure preferably includes a step of molding the decorative film for molding according to the embodiment of the present disclosure.

Since the decorative film for molding according to the embodiment of the present disclosure has excellent molding processability, the decorative film according to the embodiment of the present disclosure can be suitably used for manufacturing a molded product, and for example, it is particularly suitable for manufacturing a molded product by at least one molding selected from the group consisting of three-dimensional molding and insert molding.

Hereinafter, the method for producing (method for molding) a molded product will be described in detail by taking insert molding as an example.

In the insert molding, the molded product is obtained, for example, by previously disposing a decorative film for molding in a mold and injection-molding a base material resin into the mold. By this insert molding, a molded product in which the surface of the resin molded product is integrated with the decorative film for molding is obtained.

Hereinafter, one embodiment of the method for producing a molded product by insert molding will be described.

The method for producing a molded product includes a step of disposing a decorative film for molding in a mold for injection molding and closing the mold, a step of injecting a molten resin into the mold, and a step of taking out a molded product in a case where the injected resin has solidified.

The mold for injection molding (that is, molding mold) used for manufacturing the molded product includes a mold (that is, male mold) having a convex shape, and a mold (that is, female mold) having a concave shape corresponding with the convex shape, and after disposing the decorative film for molding on a molding surface which is an inner peripheral surface of the female mold, the mold is closed.

Here, before disposing the decorative film for molding in the molding mold, by molding (preforming) the decorative film for molding using the molding mold, it is also possible to apply a three-dimensional shape to the decorative film for molding in advance and supply the decorative film for molding to the molding mold.

In addition, in a case of disposing the decorative film for molding in the molding mold, it is necessary to align the decorative film for molding with the molding mold in a state of inserting the decorative film for molding into the molding mold.

As a method of aligning the decorative film for molding with the molding mold in a state of inserting the decorative film for molding into the molding mold, there is a method of inserting and holding a fixing pin of the male mold into an alignment hole of the female mold.

Here, in the female mold, the alignment hole is formed in advance at an end portion (a position where the three-dimensional shape is not formed after molding) of the decorative film for molding.

In addition, in the male mold, the fixing pin is formed in advance at a position to be fitted with the alignment hole.

In addition, as a method of aligning the decorative film for molding with the molding mold in a state of inserting the decorative film for molding into the molding mold, the following method can be used in addition to the method of inserting the fixing pin into the alignment hole.

Examples thereof include a method of fine-adjusting and aligning the decorative film for molding by driving on a transporting device side as a target to an alignment mark which is applied in advance to a position of the decorative molded film where the three-dimensional shape is not formed after molding. In this method, the alignment mark is preferably recognized at two or more diagonal points in a case of viewing from a product portion of the injection-molded product (decorative molded article).

After aligning the decorative film for molding with the molding mold and closing the molding mold, a molten resin is injected into the molding mold in which the decorative film for molding has been inserted. In a case of injection,

the molten resin is injected on a side of the above-described resin base material of the decorative film for molding.

The temperature of the molten resin injected into the molding mold is set depending on the physical properties of the used resin, and the like.

For example, in a case where the used resin is an acrylic resin, the temperature of the molten resin is preferably in a range of 240°C to 260°C.

For the purpose of suppressing abnormal deformation of the decorative film for molding due to heat and gas generated in a case of injecting the molten resin into the molding mold, a position of an inlet (injection port) of the male mold may be set according to the shape of the molding mold and the type of the molten resin.

After solidifying the molten resin which is injected into the molding mold into which the decorative film for molding has been inserted, the molding mold is opened, and an intermediate decorative molded article, in which the decorative film for molding is fixed to a molding base material which is a solidified molten resin, is taken out from the molding mold.

In the intermediate molded product, around a decorative part which will be the final product (molded product), a burr and a dummy portion of the molded product are integrated. Here, the dummy portion has an insertion hole formed by inserting the fixing pin in the above-described alignment.

Therefore, finishing is performed to remove the burr and the dummy portion from the intermediate molded product before the finishing, thereby obtaining a molded product.

In addition, suitable examples of the above-described molding include three-dimensional molding.

Suitable examples of the three-dimensional molding include heat molding, vacuum molding, pressure molding, and vacuum pressure molding.

The method of performing the vacuum molding is not particularly limited, but is preferably a method of performing three-dimensional molding in a heated state under vacuum.

The vacuum means a state in which an inside of a chamber is evacuated to a vacuum degree of 100 Pa or less.

It is sufficient that the temperature in a case of performing the three-dimensional molding is appropriately set depending on the used base material for molding, but the temperature is preferably in a temperature range of 60°C or higher, more preferably in a temperature range of 80°C or higher, and still more preferably in a temperature range of 100°C or higher. The upper limit of the temperature in a case of performing the three-dimensional molding is preferably 200°C.

The temperature in a case of performing the three-dimensional molding means a temperature of the base material for molding supplied for the three-dimensional molding, and is measured by attaching a thermocouple to the surface of the base material for molding.

The above-described vacuum molding can be performed using a vacuum molding technique widely known in the molding field, and for example, the vacuum molding may be performed using Formech 508FS manufactured by NIHON SEIZUKI KOGYO CO., LTD.

Examples of the method of molding so that the maximum height (T2) in the vertical direction has the relationship of Expression 1 with respect to the width (T1) of the longest portion in the plane direction of the display include a method of molding the decorative film into a mold having the relationship of $T2 > 0.02 \times T1$ of the maximum height (T2) in the vertical direction with respect to the width (T1) of the longest portion in the plane direction of the display.

The mold having the relationship of Expression 1 of the maximum height (T2) in the vertical direction with respect to the width (T1) of the longest portion in the plane direction of the display is not particularly limited as long as the condition is satisfied, but a base material having a transmittance of 88% or more is preferable, and a base material having a transmittance of 91.5% or more is more preferable.

Examples of a material of the mold include glass and plastic, and preferred examples thereof include glass, acrylic, and polycarbonate. Glass or acrylic is more preferable, and acrylic is most preferable.

The shape is not particularly limited, but a convex shape having the maximum height near a central portion is preferable.

Examples thereof include a lens shape and a pyramid shape. In addition, a shape having a uniform unevenness pattern in-plane is also preferable. Examples thereof include a microlens array structure and a lenticular structure.

<Step of curing protective layer>

In a case where the decorative film for molding has the above-described protective layer, the molding method according to the embodiment of the present disclosure preferably includes a step of curing the protective layer in the above-described decorative film for molding.

The curing method in the step of curing the protective layer is not particularly limited, and may be selected according to the crosslinkable group of the above-described siloxane resin included in the protective layer, the presence or absence of the ethylenic unsaturated group of the above-described organic resin, and the above-described polymerization initiator. However, a method of curing the above-described protective layer with light or heat is preferable, and a method of curing the above-described protective layer with light is more preferable.

If possible, the exposure in the step of curing the protective layer may be performed from either side of the above-described decorative film for molding, but it is preferable to be performed from the side of the protective layer.
In addition, in a case where a cover film is provided as the outermost layer on the side of the protective layer, the exposure may be performed with a state in which the cover film is provided (before the cover film is peeled off). In a case of performing the exposure from the above-described cover film side, the total light transmittance of the above-described cover film is preferably 80% or more and more preferably 90% or more.
As the exposure method, for example, methods described in paragraphs 0035 to 0051 of JP2006-23696A can be also suitably used in the present disclosure.
As a light source for the exposure, any light source capable of irradiating light in a wavelength range in which the protective layer can be cured (for example, 365nm or 405 nm) can be appropriately selected and used.
Specific examples thereof include an ultra-high pressure mercury lamp, a high pressure mercury lamp, and a metal halide lamp.
The exposure amount is not particularly limited and may be set appropriately, but is preferably 5 $mJ/cm^2$ to 2,000 $mJ/cm^2$ and more preferably 10 $mJ/cm^2$ to 1,000 $mJ/cm^2$.
In addition, in the step of curing the protective layer, in addition to the protective layer, the above-described colored layer may be cured simultaneously or sequentially as necessary.
In a case of exposing the above-described colored layer with light, the above-described colored layer preferably includes the polymerizable compound and the photopolymerization initiator. By exposing the colored layer including the polymerizable compound and the photopolymerization initiator, a cured colored layer can be obtained.
In the step of curing the protective layer, in a case where the protective layer is cured by heat, the heating temperature and heating time are not particularly limited, and may be appropriately selected depending on a thermal polymerization initiator and the like to be used. For example, the heating temperature is preferably 60°C to 200°C, and the heating time is preferably 5 minutes to 2 hours. The heating unit is not particularly limited, and a known heating unit can be used. Examples thereof include a heater, an oven, a hot plate, an infrared lamp, and an infrared laser.

<Other steps>

The molding method according to the embodiment of the present disclosure may include any other steps, for example, a step of attaching the decorative film for molding according to the embodiment of the present disclosure to a member for molding, and as described above, a step of removing a burr from the molded product, a step of removing a dummy portion from the molded product, and the like, in addition to the above-described steps as desired.
The other steps are particularly limited, and can be performed by using a known unit and a known method.
The application of the molded product obtained as described above is not particularly limited and can be used for various products, and particularly suitable examples thereof include interior and exterior of displays, interior and exterior of automobiles, interior and exterior of electric appliances, and packaging containers. Among these, the interior and exterior of displays are preferable, and the exterior of displays is more preferable.

(Display)

The display according to the embodiment of the present disclosure is a display in which a molded product obtained by molding the decorative film for molding according to the embodiment of the invention described above is disposed on a display unit.
Among these, it is preferable to be a display including a display unit and a molded product of a decorative film for molding having a plastic base material and a reflective layer which is provided on the plastic base material and has a center wavelength of a selective reflection wavelength in a range of 380 nm to 780 nm, the molded product being disposed adjacent to the display unit, in which, in the molded product, a maximum height (T2) of a display surface of the display unit in a normal direction with respect to a maximum width (T1) of the display surface in an in-plane direction has a relationship of $T2 > 0.02 \times T1$.

Examples

Hereinafter, the present disclosure will be described in detail with reference to examples, but the present disclosure is not limited thereto. In the present examples, "%" and "part" respectively indicate "% by mass" and "part by mass" unless otherwise specified.

<Formation of alignment layer 1>

As a base material, an acrylic film (manufactured by Sumika Acryl Co., Ltd., TECHNOLLOY S001, Tg of the

base material was 105°C) having a thickness of 125 μm was prepared. A coating liquid for forming an alignment layer 1 was applied to one side of the base material with a wire bar coater. Thereafter, the base material was dried at 80°C for 120 seconds to produce a base material having an alignment layer 1 having a layer thickness of 1.0 μm.

[Composition of coating liquid for forming alignment layer 1]

Modified polyvinyl alcohol shown below: 28 parts
Citric acid ester (AS3, manufactured by SANKYO CHEMICAL Co., Ltd.): 1.2 parts
Photopolymerization initiator (IRGACURE 2959, manufactured by BASF): 0.84 parts
Glutaraldehyde: 2.8 parts
Water: 699 parts
Methanol: 226 parts

Modified polyvinyl alcohol (the numbers at the lower right of each constitutional unit represent the molar ratio)

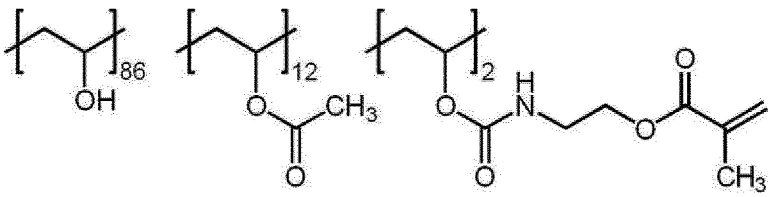

<Formation of cholesteric liquid crystal layer 1>

A surface of the produced alignment film 1 of the base material was subjected to a rubbing treatment (rayon cloth, pressure: 0.1 kgf (0.98 N), rotation speed: 1,000 rpm, transportation speed: 10 m/min, number of times: 1 round trip) in a direction rotated counterclockwise by 31.5° with respect to a short side direction.
Components in the composition shown below were stirred and dissolved in a container kept at 25°C to prepare a coating liquid 1 (liquid crystal composition 1) for a cholesteric liquid crystal layer.

[Composition of coating liquid 1 for cholesteric liquid crystal layer]

Methyl ethyl ketone: 150.6 parts
Liquid crystal compound 1 shown below rod-like liquid crystal compound): 93.4 parts
Photopolymerization initiator A (IRGACURE 907, manufactured by BASF): 0.50 parts
Chiral agent A shown below: 3.3 parts
Chiral agent B shown below: 3.3 parts
Surfactant F1 shown below: 0.027 parts

Liquid crystal compound 1 (monofunctional): rod-like liquid crystal compound shown below; the liquid crystal compound 1 is a radical polymerization type, and defined as monofunctional because, although the liquid crystal compound 1 has an oxetanyl group (cationically polymerizable functional group), the liquid crystal compound 1 has one acryloxy group (radically polymerizable group)

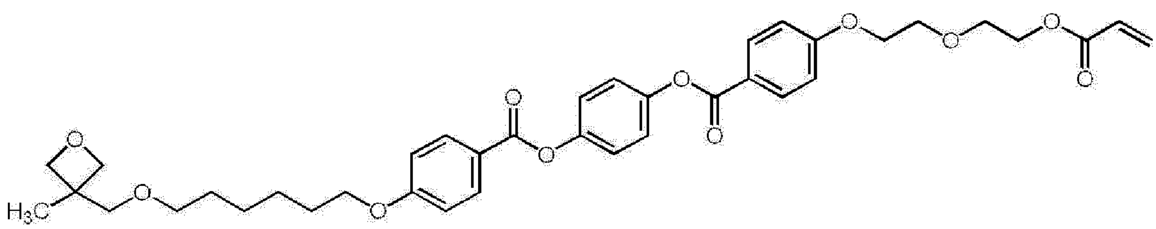

Chiral agent A (bifunctional): compound shown below

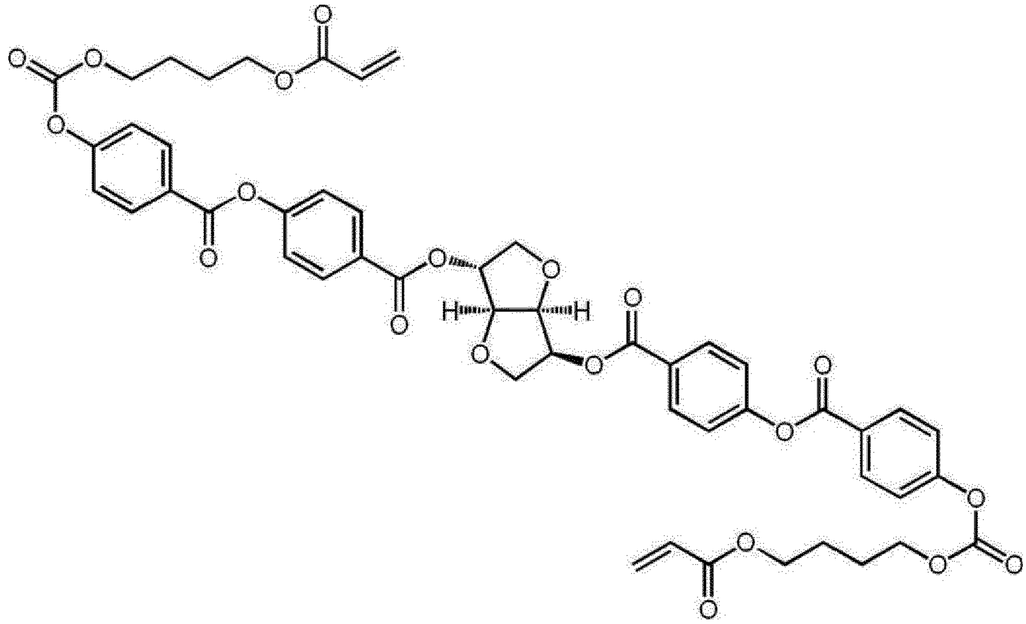

Chiral agent B (non-functional): compound shown below; in the compound, Bu represents an n-butyl group.

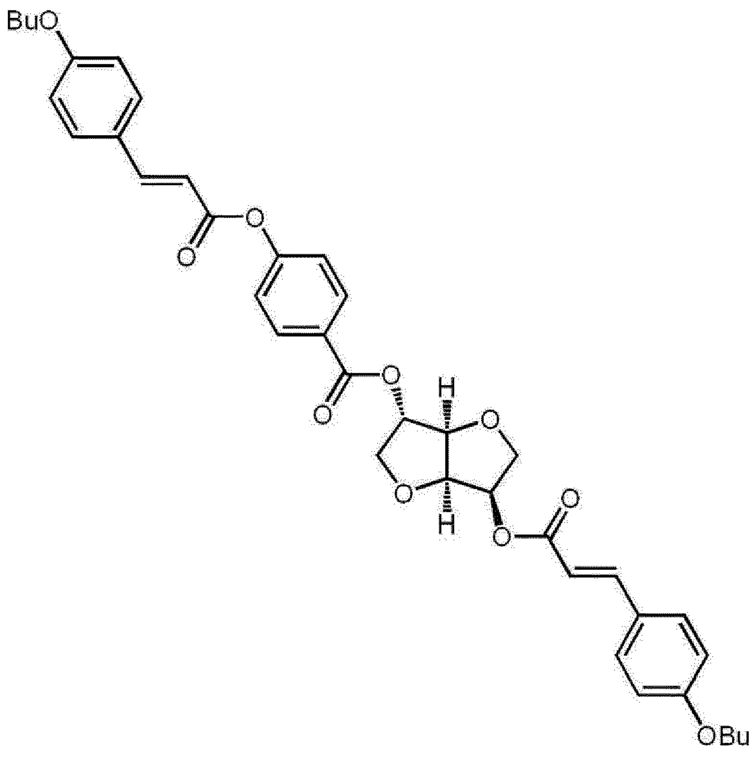

Surfactant F1: compound shown below

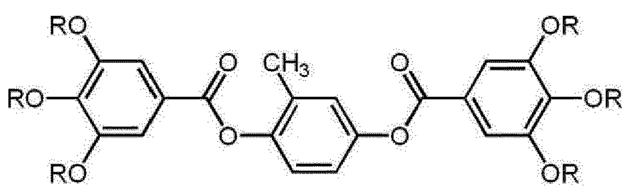

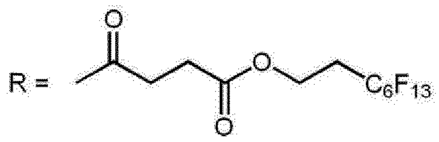

The prepared liquid crystal composition 1 was applied to a surface of the rubbing-treated alignment layer 1 with a wire bar coater, and dried at 85°C for 120 seconds to produce a laminated body which had a cholesteric liquid crystal layer 1 having a layer thickness of 1.4 μm.

<Formation of pressure-sensitive adhesive layer 1>

An acrylic pressure sensitive adhesive liquid (SK-Dyne SG-50Y, manufactured by Soken Chemical & Engineering Co., Ltd.) was applied, with a comma coater, to a side on which the cholesteric liquid crystal layer 1 of the base material had been formed, and dried at 120°C for 2 minutes, thereby forming a pressure-sensitive adhesive layer 1 having a layer thickness of 25 μm. In this way, the laminate 1 (decorative film 1 for molding) was produced.

<Molding>

The laminate 1 was prepared in a molding die which is composed of a concave mold having a concave portion imitating the shape shown in Figs. 1 to 3 and a convex mold 10 combined with the concave mold. The laminate 1 was placed on the concave mold of the molding die on a side having the concave portion, and a convex surface 12 of the convex mold 10 was brought into contact with to mold the laminate 1 with a compressed air molding (TOM molding).

Fig. 1 is a schematic plan view of the convex mold of the molding die which is composed of the concave mold and the convex mold in a case of being viewed from above. Fig. 2 is a schematic cross-sectional view schematically showing a cross section (cross section in a minor axis direction) 22 cut in a direction parallel to a longitudinal direction in the top view of Fig. 1, and Fig. 3 is a schematic cross-sectional view schematically showing a cross section (cross section in a major axis direction) 32 cut in a direction parallel to a lateral direction in the top view of Fig. 1.

A TOM molding machine NGF-0510-R (manufactured by Fu-se Vacuum Forming) was used for the compressed air molding, and the molding temperature was set to 120°C and the stretching ratio was set to 200% at the highest portion. The laminate 1 was cured by applying, using a light exposure device (nitrogen purge UV irradiator, manufactured by GS Yuasa International Ltd., metal halide lamp, output: 120 W/cm), an integrated exposure amount of 500 mJ/cm$^2$ to a surface of the base material in a molded article after molding, thereby obtaining a molded article 1.

<Performance evaluation>

Measurements and evaluations shown below were performed. The results of measurement and evaluation are summarized in Table 1.

-Elastic modulus-

The elastic modulus of the cholesteric liquid crystal layer 1 (reflective layer) was measured using a Nano Indenter G200 manufactured by TOYO Corporation.

-Reflection characteristics-

Using a spectrophotometer V-670 manufactured by JASCO Corporation, the reflectance of the laminate 1 before molding was measured in a wavelength range of 380 nm to 1,100 nm from a normal direction on the side of the pressure-sensitive adhesive layer 1 of the laminate 1. The highest value in the maximal values of the reflection spectrum was adopted as the reflectance, and the reflectance was evaluated according to the following evaluation standard. As an evaluation result, A, B, C, or D is preferable, A, B, or C is more preferable, A or B is still more preferable, and A is most preferable.

«Evaluation standard»

A: reflectance was 30% or more.

B: reflectance was 20% or more and less than 30%.
C: reflectance was 10% or more and less than 20%.
D: reflectance was 5% or more and less than 10%.
E: reflectance was less than 5%.

-Molding processability-

The obtained molded article 1 was visually observed, the cracked state of the liquid crystal layer was observed, and the evaluation was performed according to the following evaluation standard. As an evaluation result, A, B, C, or D is preferable, A, B, or C is more preferable, A or B is still more preferable, and A is most preferable.

As for the stretching rate, a film printed with a lattice pattern having a width of 2 mm was TOM-molded into the mold of Figs. 1 to 3 to prepare a molded article, and the stretching ratio of each region of the molded article was calculated by the stretching length of the lattice pattern (comparison of lengths of lattice sides before and after molding). The film printed with a lattice pattern having a width of 2 mm was printed on an acrylic film (manufactured by Sumika Acryl Co., Ltd., TECHNOLLOY S001) having a thickness of 125 μm using black ink of an inkjet printer (Acuity (registered trademark) LED 1600, manufactured by FUJIFILM Corporation). A TOM molding machine NGF-0510-R (manufactured by Fu-se Vacuum Forming) was used for the molding, and the molding temperature was set to 120°C.

«Evaluation standard»

A: cured film was not cracked even in a region where the stretching rate was 100% or more.
B: cured film was not cracked in a region where the stretching rate was less than 50%, but the cured film was cracked in a region where the stretching rate was 50% or more.
C: cured film was not cracked in a region where the stretching rate was less than 25%, but the cured film was cracked in a region where the stretching rate was 25% or more.
D: cured film was not cracked in a region where the stretching rate was less than 10%, but the cured film was cracked in a region where the stretching rate was 10% or more.
E: cured film was cracked even in a region where the stretching rate was less than 10%.

(Examples 2 to 7 and Comparative Examples 1 and 2)

Laminates 2 to 7, and C1 and C2 (decorative films for molding 2 to 7, and C1 and C2) and molded articles 2 to 7, and C1 and C2 were respectively produced in the same manner as in Example 1, except that composition of the liquid crystal composition 1 was changed to composition shown in Table 1 or Table 2.

In addition, the measurements and evaluations were performed by the same method as in Example 1. The results of measurement and evaluation are summarized in Table 1.

[Table 1]

| | | | Example 1 | Example 2 | Example 3 | Example 4 | Example 5 | Example 6 | Example 7 | Comparative example 1 | Comparative example 2 |
|---|---|---|---|---|---|---|---|---|---|---|---|
| Decorative film for molding | | | 1 | 2 | 3 | 4 | 5 | 6 | 7 | C1 | C2 |
| Liquid crystal composition (parts by mass) | Liquid crystal compound 1 | Monofunctional | 93.4 | | 43.4 | 18.4 | 83.4 | 63.4 | 43.4 | | |
| | Liquid crystal compound 2 | Bifunctional | | 93.4 | | | | | | | |
| | Liquid crystal compound 3 | Non-functional | | | 50 | 75 | | | | | 93.4 |
| | Liquid crystal compound 4 | Tetrafunctional | | | | | 10 | 30 | 50 | 93.4 | |
| | Chiral agent A | Bifunctional | 3.3 | 4 | 4 | 4 | 4 | 4 | 4 | 4 | 4 |
| | Chiral agent B | Non-functional | 3.3 | 4 | 4 | 4 | 4 | 4 | 4 | 4 | 4 |
| Elastic modulus at Tg of substrate + 10°C (115°C) [GPa] | | | 0.001 | 0.01 | 0.0003 | 0.00002 | 0.02 | 0.1 | 0.4 | 1.5 | < 0.00001 |
| Reflection characteristic (tint) | Before molding (Fresh) | Reflectance (reflected tint) | A | A | A | C | A | A | A | A | E |
| | | Reflected color | Green | Green | Green | Green | Green | Green | Green | Green | Green |
| Molding processability | Crack suppression | | A | A | A | D | B | C | D | E | E |

The reflected color in Table 1 indicates a color visually recognized in a case where the decorative film for molding is visually observed from the base material side. The fact that green is the reflected color means that light of approximately 550 nm is reflected.

The abbreviations shown in Table 1 and Table 2, other than those described above, are shown below.

Liquid crystal compound 2 (bifunctional): rod-like liquid crystal compound shown below (1,4-bis [4-(3-acryloyloxypropoxy)benzoyloxy]-2-methylbenzene, manufactured by Tokyo Chemical Industry Co., Ltd.)

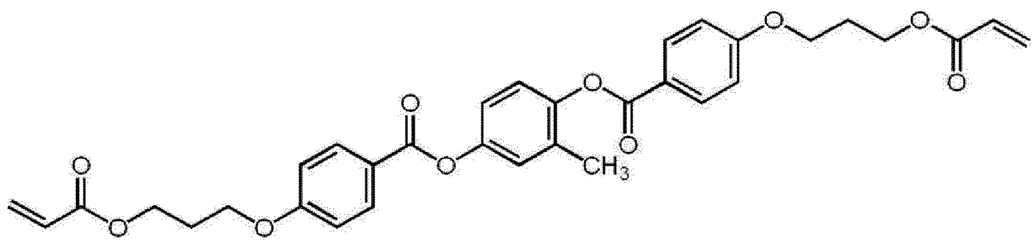

Liquid crystal compound 3 (non-functional): rod-like liquid crystal compound shown below

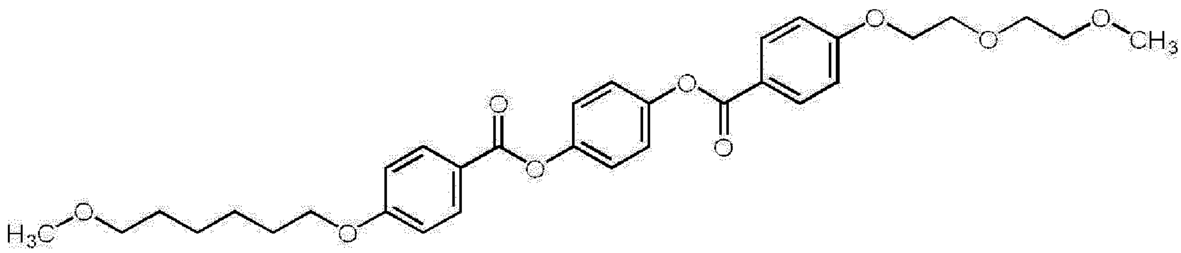

Liquid crystal compound 4 (tetrafunctional): rod-like liquid crystal compound shown below

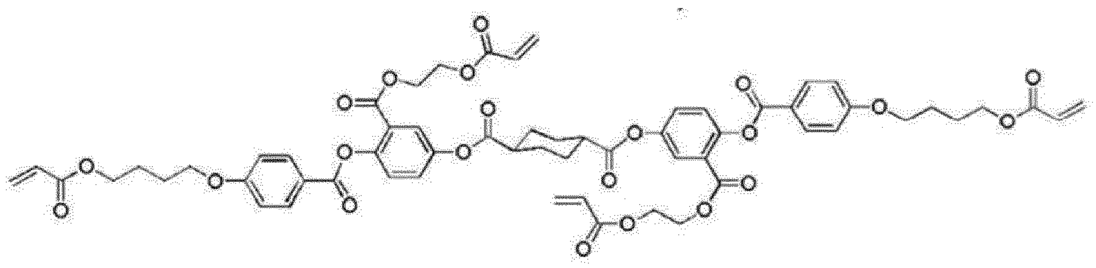

In a case where the molded articles 1 to 7 were installed on a display unit of iPhone 8S (manufactured by Apple, space gray surface color, display side black decoration) with the concave surface of the molded article facing the display unit, when the display was turned off, a bright green reflected color was confirmed in three dimensions.

On the other hand, when the display was turned on, an image displayed on the display was clearly visible through the molded article, and effectiveness as a three-dimensional transparent decorative film was confirmed.

As shown in Table 1, compared with the decorative films for molding of Comparative Examples 1 and 2, the decorative films for molding of Examples 1 to 7 had better moldability.

In addition, the decorative films for molding of Examples 1 to 7 had high reflectance, excellent decorativeness, and also had a function as a transparent decorative film.

(Examples 8 to 10 and Reference Example 1)

Molded articles 8 to 10 were produced in the same manner as in Example 1, except that, in Example 1, after the cholesteric liquid crystal layer 1 was formed, a retardation layer of a 1/4 wave plate was transferred and formed into a surface of the cholesteric liquid crystal layer by the method described in paragraphs 0170 and 0171 of JP2017-215558A, and after that, a pressure-sensitive adhesive layer was formed on the retardation layer of the 1/4 wave plate, and the convex mold used for molding was changed to a convex mold 40 having the shape shown in Fig. 4 (contacting a convex surface 52 of the convex mold 40).

Fig. 4 is a schematic plan view of another example of a convex mold of a molding die which is composed of a

concave mold and a convex mold in a case of being viewed from above, and Fig. 5 is a schematic cross-sectional view schematically showing a cross section 62 obtained by cutting the convex mold of Fig. 4 along a line passing through a circular center in the top view. In Fig. 4, the maximum width (T1) of the display surface of the display unit in the in-plane direction and the maximum height (T2) of the display surface of the display unit in the normal direction are as shown in Table 2, respectively.

The molded articles 8 to 10 were installed on a display unit and a rear surface of ELT-24S Round (manufactured by TEIDEC LTD., inorganic EL transparent display) with the concave surface of the molded article facing the display side. The visibility of the display side and the rear surface side in a case where an image was displayed on the display was evaluated according to the following evaluation standard. In addition, as Reference Example 1, a laminate 1 (unmolded product) was attached to a display unit and a rear surface of ELT-24S Round (manufactured by TEIDEC LTD., inorganic EL transparent display) from the pressure-sensitive adhesive layer side, and the evaluation was performed in the same manner as in Examples 8 to 10. The results are summarized in Table 2.

-Visibility of displayed image-

«Evaluation standard»

A: displayed image on the display was clearly visible.
B: displayed image on the display was not clearly visible, and the reflected tint of the cholesteric liquid crystal layer was strongly visible.

-Uniformity of tint (evaluation that uniform color can be obtained regardless of viewing angle)-

In a case where a direction perpendicular to the in-plane direction of the display surface of the display unit (normal direction of the display surface) was set to 0°, the change in tint in a case of viewing from the angles of 0° and 45° (for example, yellow in the 0° direction, blue in the 45° direction, and the like) was evaluated. As an evaluation result, A, B, or C is preferable, A, B, or C is more preferable, and A is particularly preferable.

«Evaluation standard»

A: there was almost no change in tint between a case of viewing from the 0° direction and a case of viewing from the 45° direction.
B: there was a slight change in tint between a case of viewing from the 0° direction and a case of viewing from the 45° direction.
C: there was a change in tint between a case of viewing from the 0° direction and a case of viewing from the 45° direction, but the tints are the same.
D: there was a large change in tint between a case of viewing from the 0° direction and a case of viewing from the 45° direction.

[Table 2]

| | | Example 8 | Example 9 | Example 10 | Reference example 1 |
|---|---|---|---|---|---|
| T1 [mm] | | 86 | 86 | 86 | 86 |
| T2 [mm] | | 9 | 4.5 | 1.8 | 0 |
| Display screen side | Visibility of displayed image | A | A | A | A |
| | Uniformity of tint | - | - | - | - |
| Rear surface side | Visibility of displayed image | B | B | B | B |
| | Uniformity of tint | A | A | B | C |

As shown in Table 2, the decorative films for molding of Examples 8 to 10 were excellent in visibility of the

image in a case of being viewed from the display surface side of the transparent display, while the visibility was low from the rear surface side, and the displayed image was firmly concealed. In addition, the reflected color of the cholesteric liquid crystal layer was visually recognized as a uniform tint from the rear surface side regardless of the angle, demonstrating an excellent function as a decorative film.

## Claims

**1.** A decorative film for molding comprising:

a plastic base material; and
a reflective layer which is provided on the plastic base material and a center wavelength of a selective reflection wavelength of which is in a range of from 380 nm to 780 nm,
an elastic modulus of the reflective layer at a temperature of a glass transition temperature of the plastic base material + 10°C being from 0.00001 GPa to 0.5 GPa,
wherein the reflective layer is a layer comprising a cholesteric liquid crystal compound,
wherein the cholesteric liquid crystal compound has one ethylenic unsaturated group and one cyclic ether group.

**2.** The decorative film for molding according to claim 1,
wherein the reflective layer further comprises: a chiral agent comprising a polymerizable group; or a chiral agent comprising a polymerizable group and a chiral agent not comprising a polymerizable group.

**3.** The decorative film for molding according to claim 2,
wherein the chiral agent comprising a polymerizable group has two or more polymerizable groups.

**4.** The decorative film for molding according to any one of claims 1 to 3,
wherein the layer comprising a cholesteric liquid crystal compound is a cured substance of a liquid crystal composition comprising the cholesteric liquid crystal compound and a photopolymerization initiator.

**5.** The decorative film for molding according to claim 4,
wherein the liquid crystal composition includes 25% by mass or more of the cholesteric liquid crystal compound having one ethylenic unsaturated group and one cyclic ether group with respect to a total solid content of the liquid crystal composition.

**6.** A molded product (12, 52) obtained by molding the decorative film for molding according to any one of claims 1 to 5.

**7.** A display comprising:
the molded product (12, 52) according to claim 6 disposed on a display unit.

**8.** The display according to claim 7, product being disposed adjacent to the display unit,
the molded product (12, 52) having a relationship of $T2 > 0.02 \times T1$, in which T2 being a maximum height of a display surface of the display unit in a normal direction, and T1 being a maximum width of the display surface in an in-plane direction.

## Patentansprüche

**1.** Dekorative Folie für Formteile bzw. zum Formen, umfassend:

ein Kunststoffgrundmaterial; und eine reflektierende Schicht, die auf dem Kunststoffgrundmaterial vorgesehen ist und deren mittlere Wellenlänge einer selektiven Reflexionswellenlänge in einem Bereich von 380 nm bis 780 nm liegt,
wobei ein Elastizitätsmodul der reflektierenden Schicht bei einer Glasübergangstemperatur des Kunststoffgrundmaterials + 10°C in einem Bereich von 0,00001 GPa bis 0,5 GPa liegt,
wobei die reflektierende Schicht eine Schicht mit einer cholesterischen Flüssigkristallverbindung ist,
wobei die cholesterische Flüssigkristallverbindung eine ethylenisch ungesättigte Gruppe und eine cyclische Ethergruppe aufweist.

2. Dekorative Folie zum Formen nach Anspruch 1,
wobei die reflektierende Schicht ferner umfasst: ein chirales Mittel, das eine polymerisierbare Gruppe umfasst; oder ein chirales Mittel, das eine polymerisierbare Gruppe umfasst, und ein chirales Mittel, das keine polymerisierbare Gruppe umfasst.

3. Dekorative Folie zum Formen nach Anspruch 2,
wobei das chirale Mittel, das eine polymerisierbare Gruppe umfasst, zwei oder mehr polymerisierbare Gruppen aufweist.

4. Dekorative Folie zum Formen nach einem der Ansprüche 1 bis 3,
wobei die Schicht, die eine cholesterische Flüssigkristallverbindung umfasst, eine gehärtete Substanz einer Flüssigkristallzusammensetzung ist, die die cholesterische Flüssigkristallverbindung und einen Photopolymerisationsinitiator umfasst.

5. Dekorative Folie zum Formen nach Anspruch 4,
wobei die Flüssigkristallverbindung 25 Massenprozent oder mehr der cholesterischen Flüssigkristallverbindung mit einer ethylenisch ungesättigten Gruppe und einer zyklischen Ethergruppe in Bezug auf den gesamten Feststoffgehalt der Flüssigkristallverbindung enthält.

6. Geformtes Produkt (12, 52), erhalten durch Formen der dekorativen Folie zum Formen nach einem der Ansprüche 1 bis 5.

7. Anzeige, umfassend:
das geformte Produkt (12, 52) nach Anspruch 6, das auf einer Anzeigeeinheit angeordnet ist.

8. Anzeige nach Anspruch 7, wobei das geformte Produkt neben der Anzeigeeinheit vorgesehen ist,
wobei das geformte Produkt (12, 52) ein Verhältnis von T2 > 0,02 x T1 hat, wobei T2 eine maximale Höhe einer Anzeigefläche der Anzeigeeinheit in einer normalen Richtung ist und T1 eine maximale Breite der Anzeigefläche in Richtung einer bzw. ihrer Ebene ist.

**Revendications**

1. Film décoratif pour le moulage comprenant :

   un matériau de base en plastique ; et une couche réfléchissante placée sur le matériau de base en plastique et dont la longueur d'onde centrale d'une réflexion sélective est comprise entre 380 nm et 780 nm,
   un module d'élasticité de la couche réfléchissante à une température de transition vitreuse du matériau de base en plastique + 10°C compris entre 0,00001 GPa et 0,5 GPa,
   dans laquelle la couche réfléchissante est une couche comprenant un composé de cristaux liquides cholestériques ,
   dans lequel le composé de cristaux liquides cholestériques possède un groupe insaturé éthylénique et un groupe éther cyclique.

2. Film décoratif pour moulage selon la revendication 1,
dans laquelle la couche réfléchissante comprend en outre : un agent chiral comprenant un groupe polymérisable ; ou un agent chiral comprenant un groupe polymérisable et un agent chiral ne comprenant pas de groupe polymérisable.

3. Film décoratif pour moulage selon la revendication 2,
dans lequel l'agent chiral comprenant un groupe polymérisable possède deux groupes polymérisables ou plus.

4. Film décoratif pour moulage selon l'une des revendications 1 à 3,
dans laquelle la couche comprenant un composé de cristaux liquides cholestériques est une substance durcie d'une composition de cristaux liquides comprenant le composé de cristaux liquides cholestériques et un initiateur de photopolymérisation.

5. Film décoratif pour moulage selon la revendication 4,

où la composition de cristaux liquides comprend 25 % en masse ou plus du composé de cristaux liquides cholestériques ayant un groupe insaturé éthylénique et un groupe éther cyclique par rapport à la teneur totale en solides de la composition de cristaux liquides.

**6.** Produit moulé (12, 52) obtenu par moulage du film décoratif pour moulage selon l'une quelconque des revendications 1 à 5.

**7.** Ecran comprenant :
le produit moulé (12, 52) selon la revendication 6 disposé sur une unité d'affichage.

**8.** Ecran selon la revendication 7, dans lequelle produit moulé est disposé à côté de l'unité d'affichage,
le produit moulé (12, 52) ayant une relation $T2 > 0,02 \times T1$, T2 étant une hauteur maximale d'une surface d'affichage de l'unité d'affichage dans une direction normale, et T1 étant une largeur maximale de la surface d'affichage dans une direction dans le plan.

FIG. 1

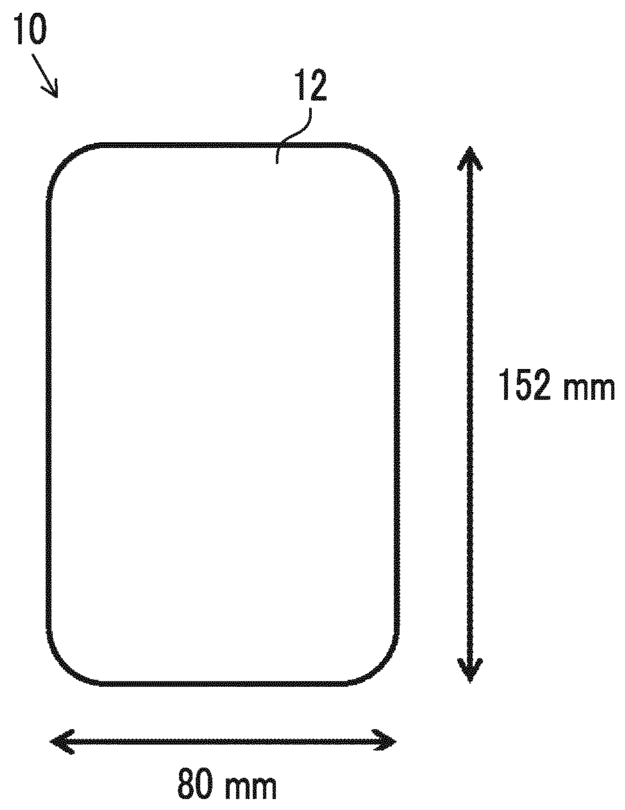


FIG. 2

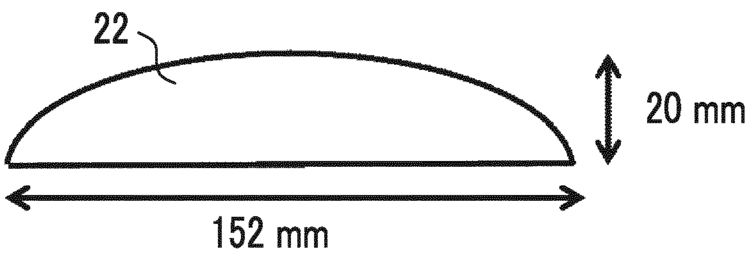


FIG. 3

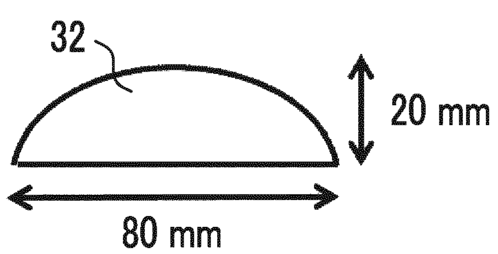

FIG. 4

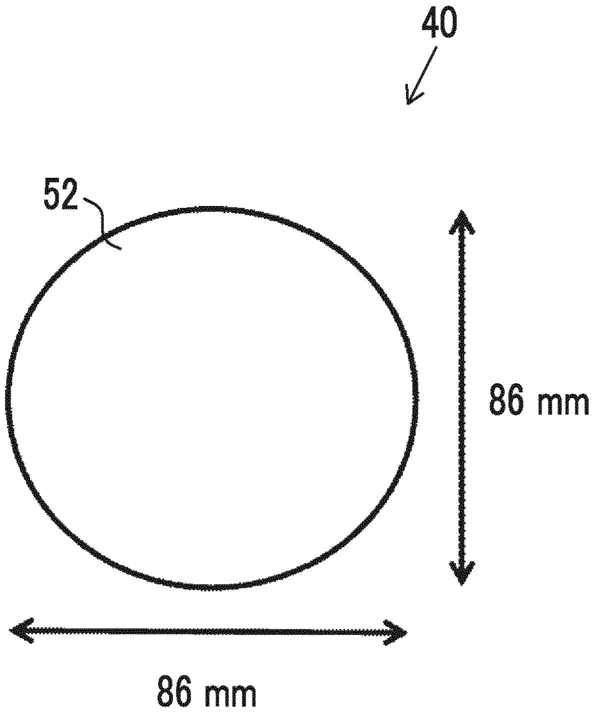


FIG. 5

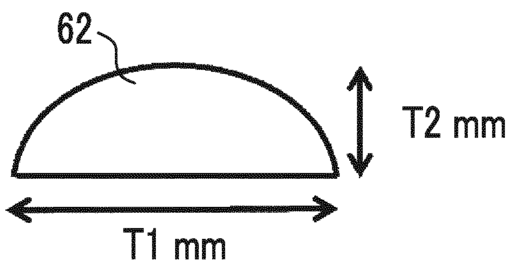

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018097327 A
- JP 2007071948 A
- JP 2011045427 A
- US 2003160938 A1
- US 2018215843 A1
- JP 2017205988 A
- JP 2015163596 A
- US 4683327 A
- US 5622648 A
- US 5770107 A
- WO 199522586 A
- WO 199524455 A
- WO 199700600 A
- WO 199823580 A
- WO 199852905 A
- JP 1272551 A
- JP H01272551 A
- JP 6016616 A
- JP H06016616 A
- JP 7110469 A
- JP H07110469 A
- JP 11080081 A
- JP H11080081 A
- JP 2001328973 A
- JP 1999513019 A
- JP H11513019 A
- JP 2007279688 A
- JP 2007108732 A
- JP 2010244038 A
- JP H0616616 A
- JP H1180081 A
- US 2367661 A
- US 2367670 A
- US 2448828 A
- US 2722512 A
- US 3046127 A
- US 2951758 A
- US 3549367 A
- JP 60105667 A
- JP S60105667 A
- US 4239850 A
- US 4212970 A
- JP 8338913 A
- JP H08338913 A
- JP 4052558 B
- JP 2006285197 A
- JP 2007076839 A
- JP 2007138138 A
- JP 2007094071 A
- JP 2007121721 A
- JP 2007140465 A
- JP 2007156439 A
- JP 2007133184 A
- JP 2009109831 A
- JP 3883848 B
- JP 4151746 B
- JP 2002229039 A
- JP 2002265541 A
- JP 2002317013 A
- JP 4205195 B
- JP 4205198 B
- JP 2003520878 A
- JP 2004529220 A
- JP 4162850 B
- JP 2005007765 A
- JP 2009256572 A
- JP 4502784 B
- JP 2009237362 A
- JP 2000310706 A
- JP 2009217258 A
- JP 2007229999 A
- JP 2006023696 A
- JP 2017215558 A


### Non-patent literature cited in the description


- *FUJIFILM Research Report,* 2005, 60-63
- *Makromol. Chem.,* 1989, vol. 190, 2255
- *Advanced Materials,* 1993, vol. 5, 107
- Liquid Crystal Device Handbook. Japan Society for the Promotion of Science, 1989, 199
- Handbook of Liquid crystals. Maruzen, 30 October 2000
- Handbook of Liquid crystals. Maruzen
- Characterization evaluation of release paper, release film, and adhesive tape, and control technique. Information Mechanism. 2004